(19) Europäisches Patentamt
European Patent Office
Office européen des brevets

(11) EP 1 088 860 B1

(12) EUROPEAN PATENT SPECIFICATION

(45) Date of publication and mention of the grant of the patent:
**07.12.2005 Bulletin 2005/49**

(51) Int Cl.[7]: **C09D 11/00**, B41J 2/01

(21) Application number: **00121188.7**

(22) Date of filing: **29.09.2000**

# (54) Aqueous ink composition for ink jet and ink jet recording method

Wässrige Tintenstrahltintenzusammensetzung und Tintenstrahlaufzeichnungsverfahren

Composition d'encre aqueuse pour l'enregistrement par jet d'encre et procédé d'enregistrement

(84) Designated Contracting States:
**DE ES FR GB IT NL**

(30) Priority: **30.09.1999 JP 28039999**

(43) Date of publication of application:
**04.04.2001 Bulletin 2001/14**

(73) Proprietor: **CANON KABUSHIKI KAISHA**
**Tokyo (JP)**

(72) Inventors:
- **Takahashi, Katsuhiko, Canon Kabushiki Kaisha Tokyo (JP)**
- **Kurabayashi, Yutaka, Canon Kabushiki Kaisha Tokyo (JP)**
- **Eguchi, Takeo, Canon Kabushiki Kaisha Tokyo (JP)**
- **Ogasawara, Masashi, Canon Kabushiki Kaisha Tokyo (JP)**
- **Asaki, Noriyasu, Canon Kabushiki Kaisha Tokyo (JP)**

(74) Representative: **TBK-Patent**
**Bavariaring 4-6**
**80336 München (DE)**

(56) References cited:
**EP-A- 0 130 789**
**EP-A- 0 732 381**
**EP-A- 0 947 567**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

BACKGROUND OF THE INVENTION

Field of the Invention

The present invention relates to an ink composition for ink jet which is suitable for ink jet recording, produces a high quality image, is superior particularly in the stability of intermittent ejection from an ink jet recording head, and inhibits a thickened material of the ink from adhering to an ejection port surface in an ink jet head.

Related Background Art

An ink jet recording method comprises ejecting an ink, and attaching the ink to paper or another recording material to perform recording. For example, according to an ink jet recording system disclosed in Japanese Patent Publication Nos. 61-59911, 61-59912, 61-59914 and the like, that is, according to the ink jet recording method of using an electrothermal conversion member as ejection energy supply means, applying heat energy to the ink to generate a bubble and to thereby eject the ink, high-density multiple orifices of a recording head can easily be realized, and an image having a high resolution and a high quality level can be recorded at a high speed. Such system is main one of ink jet recording methods put into practical use at present.

In this regard, as the ink for use in such an ink jet recording method, for example, an aqueous ink is used in which a water-soluble dye is used as a coloring material. A recorded image formed with the ink therefore requires the further enhancement of water resistance and resistance to a line marker on a plain paper (hereinafter referred to simply as marker resistance). In this field, a large number of means for particularly improving the density and the water resistance of the recorded image have been proposed, and as one of these means, there is a technique of using a pigment as the coloring material and dispersing the pigment in water to form a pigment dispersion ink. For example, the pigment dispersion ink using carbon black as the coloring material can form the recorded image provided with a high image density and a superior water resistance. However, for the recorded image, there is still room for improvement in the rub resistance and the marker resistance of the image formed particularly on the plain paper.

Furthermore, in a dispersion ink containing such a water-insoluble coloring material and a resin, ink jet ejection stability is adversely affected in some cases. Particularly, intermittent ejection stability tends to be influenced. An intermittent ejection defect means a phenomenon in which when the ink is ejected from a certain nozzle during printing and no ink is then ejected from the same nozzle for a certain time (e.g., about 30 seconds), and when the next one ink droplet is ejected from the nozzle, stable ejection fails to be performed, and the printing is disordered.

Furthermore, during the use of the dispersion ink containing the water-insoluble coloring material and the resin in an ink jet head, there is another problem that ink mist or the like adheres to an ink ejection port surface. When this state is left to stand for a long time, a thickened material of the ink adheres to the ejection port surface, whereby printing distortion or ejection defect occurs in some cases.

EP 0 947 567 discloses an ink comprising a pigment and a resin. In said latter resin a coloring material is encapsulated. The described ink leads to images having a high optical density and can be used in ink-jet recording.

SUMMARY OF THE INVENTION

The present invention has been developed in consideration of the aforementioned background technique, and an object of the present invention is to provide an ink for ink jet which produces an image having a high image density, an excellent rub resistance, water resistance and marker resistance, is superior in intermittent ejection stability from a recording head during use in ink jet recording, and can inhibit printing distortion or ejection defect from being caused by a thickened material of the ink attached to an ejection port surface in an ink jet head.

Still another object of the present invention is to provide an ink jet recording method which can form a high quality level ink jet image having an excellent rub resistance, water resistance and marker resistance on a recording material.

According to one aspect of the present invention, there is provided an aqueous ink composition for ink jet comprising a colorant-containing resin fine particle, a pigment fine particle and a polyhydric alcohol, said composition further comprising at least one of a compound represented by the following general formula (I) and a compound represented by the following general formula (II):

General formula (I)

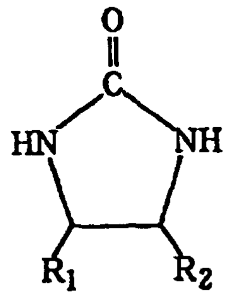

General formula (II)

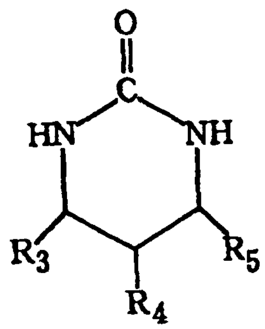

wherein $R_1$ to $R_5$ are independently each a hydrogen atom, $CH_3$ or $C_2H_5$.

According to another aspect of the present invention, there is provided an ink cartridge comprising an ink container containing, for example, the aforementioned aqueous ink composition.

According to a still further aspect of the present invention, there is provided an ink jet recording method comprising a step of applying an aqueous ink composition for ink jet to a recording material by an ink jet process, said aqueous ink composition for ink jet comprising a colorant-containing resin fine particle, a pigment fine particle, a polyhydric alcohol, and at least one of a compound represented by the following general formula (I) and a compound represented by the following general formula (II):

General formula (I)

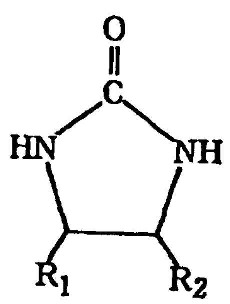

General formula (II)

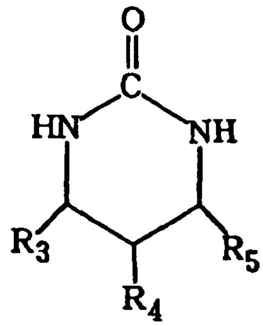

wherein $R_1$ to $R_5$ are independently each a hydrogen atom, $CH_3$ or $C_2H_5$.

BRIEF DESCRIPTION OF THE DRAWINGS

Fig. 1 is a schematic perspective view showing a main part of one example of an ink jet printer on which a liquid ejection head can be mounted.
Fig. 2 is a schematic perspective view showing one example of an ink jet cartridge provided with a liquid ejection head.
Fig. 3 is a schematic perspective view showing a main part of one example of the liquid ejection head.
Fig. 4 is a schematic view showing a part of one example of the liquid ejection head.
Fig. 5 is an enlarged view of a part of an ejection port shown in Fig. 4.
Fig. 6 is a schematic view showing an ink adhesion state in the part of the ejection port shown in Fig. 5.
Fig. 7 is a schematic view of a main part in Fig. 4.
Fig. 8 is a perspective sectional view along X-X of Fig. 7, and a schematic sectional view showing a liquid ejecting operation of the liquid ejection head with an elapse of time together with Figs. 9 to 15.
Fig. 9 is a perspective sectional view along X-X of Fig. 7, and a schematic sectional view showing the liquid ejecting operation of the liquid ejection head with an elapse of time together with Figs. 8 and 10 to 15.
Fig. 10 is a perspective sectional view along X-X of Fig. 7, and a schematic sectional view showing the liquid ejecting operation of the liquid ejection head with an elapse of time together with Figs. 8, 9, 11 to 15.
Fig. 11 is a perspective sectional view along X-X of Fig. 7, and a schematic sectional view showing the liquid ejecting operation of the liquid ejection head with an elapse of time together with Figs. 8 to 10 and 12 to 15.
Fig. 12 is a perspective sectional view along X-X of Fig. 7, and a schematic sectional view showing the liquid ejecting operation of the liquid ejection head with an elapse of time together with Figs. 8 to 11 and 13 to 15.
Fig. 13 is a perspective sectional view along X-X of Fig. 7, and a schematic sectional view showing the liquid ejecting operation of the liquid ejection head with an elapse of time together with Figs. 8 to 12 and 14, 15.
Fig. 14 is a perspective sectional view along X-X of Fig. 7, and a schematic sectional view showing the liquid ejecting operation of the liquid ejection head with an elapse of time together with Figs. 8 to 13 and 15.
Fig. 15 is a perspective sectional view along X-X of Fig. 7, and a schematic sectional view showing the liquid ejecting operation of the liquid ejection head with an elapse of time together with Figs. 8 to 14.
Fig. 16 is a schematic perspective view of an ink jet recording apparatus as one example of a liquid ejection apparatus to which the liquid ejection head of the present invention can be applied.

DETAILED DESCRIPTION OF THE PREFERRED EMBODIMENTS

The present invention will be described hereinafter in detail in reference to preferred embodiments of the present invention.

As a result of intensive studies for solving the aforementioned problems, the present inventors have found that when a compound represented by the above general formula (I) or a compound represented by the above general formula (II) and a polyhydric alcohol are included together in an ink for ink jet, a problem of intermittent ejection defect during ink jet recording, and another problem of the adhesion of a thickened material of the ink to an ejection port

surface in an ink jet head can be solved without impairing image properties such as a high image density, an excellent rub resistance, water resistance and marker resistance, thereby achieving the present invention. Its reason may be considered as follows.

In general, it is considered that the intermittent ejection defect in an ink jet head is caused by the increase in the ink's viscosity when the moisture is evaporated from the nozzle, and by film formation or solidification in an ink liquid surface on the nozzle tip end. On the contrary, since the ink of the present invention includes a compound represented by the general formula (I) or (II) and the polyhydric alcohol together, there can effectively be inhibited the increase in the ink's viscosity during the evaporation of the moisture from the nozzle and the film formation or the solidification in the ink liquid surface on the nozzle tip end, which are considered to be the causes of the intermittent ejection defect, so that an excellent intermittent ejection stability can be realized.

Moreover, it has turned out that since in the ink of the present invention the compound represented by the general formula (I) or the compound represented by the general formula (II) and the polyhydric alcohol are all together contained, when the ink the moisture of which has been evaporated and which has lost its fluidity due to an increase in the viscosity (such an ink is hereinafter referred to as "thickened ink") is added with a fresh, non-thickened ink, the fluidity of the thickened ink easily recovers to its original state, that is, "the thickened ink" is easily dissolved again. It is therefore considered that the adhesion of the thickened ink to an ejection port surface in the ink jet head can be minimized, and as a result, the printing distortion and ejection defect can effectively be prevented from occurring.

The ink of the present invention is characterized by comprising colorant-containing resin fine particles, a pigment, at least one of the compound represented by the general formula (I) and the compound represented by the general formula (II), and a polyhydric alcohol. The respective constituting materials will be described hereinafter in order of the following (1) to (4):

(1) the colorant-containing resin fine particles;
(2) the pigment;
(3) the compound represented by the general formula (I) or the compound represented by the general formula (II); and
(4) the polyhydric alcohol.

(1) The colorant-containing resin fine particles:

First, the colorant-containing resin will be described. Examples of the colorant-containing resin include a resin in which a colorant is enclosed in a resin micro-capsule, and a resin emulsion in which a dye, a pigment or the like dissolved or dispersed in an oil solvent is dispersed in an aqueous medium. Particularly, a micro-encapsulated resin in which the colorant is confined may preferably be used.

That is, for example, when an oil dye, a pigment or another hydrophobic colorant is used as the colorant, the colorant and a hydrophobic portion of the resin easily interact with each other owing to micro-encapsulation. It is hence presumed that the hydrophobic portion of the resin tends to be scarcely oriented into a water system. As a result, it is also presumed that when the ink for ink jet comprising the colorant-containing resin is ejected from a ink jet printer, the adhesion or deposition of the resin onto a nozzle forming surface subjected to a water repellent treatment of the ink jet head is suppressed, and this contributes to the further enhancement of the ejection stability of the ink over a long period.

The resin in which the colorant is micro-encapsulated is a resin dispersion obtained by dissolving or dispersing the colorant in an oil solvent to prepare a solution, emulsifying/dispersing the solution in water and further performing the micro-encapsulation by means of a known appropriate method.

As the colorant for use in this case, for example, a water-insoluble colorant such as a pigment or an oil-soluble dye is preferably used. That is, the water-insoluble colorant permits easily manufacturing the resin in which the colorant is micro-encapsulated. Concretely, as a black (Bk) pigment, for example, carbon black can be used. Here, this kind of carbon black is carbon black which is manufactured, for example, by a furnace method or a channel method, and preferably used is the carbon black having a primary particle diameter of 15 to 40 nm, a specific surface area by BET method of 50 to 300 $m^2/g$, a DBP oil absorption of 40 to 150 ml/100 g, a volatile content of 0.5 to 10% and a pH value of 2 to 9.

Examples of commercially available carbon black products having such properties include No. 2300, No. 900, MCF88, No. 33, No. 40, No. 45, No. 52, MA7, MA8 and No. 2200B (they are manufactured by Mitsubishi Chemical Corp.), RAVEN1255 (manufactured by Columbia), REGAL400R, REGAL330R, REGAL660R and MOGUL L (they are manufactured by Cabot), and Color Black FW-1, Color Black FW18, Color Black S170, Color Black S150, Printex 35 and Printex U (they are manufactured by Degussa).

Moreover, the following dyes can preferably be used as the oil-soluble dye.

C. I. solvent yellow 1, 2, 3, 13, 19, 22, 29, 36, 37, 38, 39, 40, 43, 44, 45, 47, 62, 63, 71, 76, 81, 85, 86, and the like
C. I. solvent red 8, 27, 35, 36, 37, 38, 39, 40, 58, 60, 65, 69, 81, 86, 89, 91, 92, 97, 99, 100, 109, 118, 119, 122, and the like
C. I. solvent blue 14, 24, 26, 34, 37, 38, 39, 42, 43, 45, 48, 52, 53, 55, 59, 67, and the like
C. I. solvent black 3, 5, 7, 8, 14, 17, 19, 20, 22, 24, 26, 27, 28, 29, 43, 45, and the like

Moreover, conventionally known various water-soluble dyes can also be used in which the counter ion (usually, sodium, potassium or ammonium ion) is replaced with an organic amine or the like.

For the various colorants as mentioned above in order to adjust or supplement a tone of a pigment described later, the colorant having the tone similar to that of the pigment is preferably selected. Such a selection enables the further improvement of the density of a recorded image. For example, when the carbon black is used as the pigment as described later, it is preferable to similarly use the carbon black as the colorant to be contained in the resin. Moreover, as the colorant contained in resin, two or more types of coloring materials selected from the aforementioned materials may be utilized. In this case, the respective colorants may separately be contained in the resins, or may be contained in the common resin to prepare the colorant-containg resin.

Next, a method of preparing the colorant-containing resin in which the colorant is micro-encapsulated as described above will be described.

First, the colorant is dissolved or dispersed in an oil solvent, and the oil solvent is then emulsified/dispersed in water. As a method of emulsifying/dispersing, in water, the oil solvent in which the colorant is dissolved or dispersed, there are a dispersing method using ultrasonic waves and a method using any of various dispersing devices and agitators. In this case, as occasion demands, any of emulsifying and dispersing auxiliaries such as various emulsifiers, dispersants and protective colloids can also be used. As these emulsifying and dispersing auxiliaries, there can be used polymeric materials such as PVA, PVP and gum arabic, an anionic surface active agent, a nonionic surface active agent, and the like.

Examples of the micro-encapsulation method of the emulsion include a method of dissolving the colorant and the resin in a water-insoluble organic solvent (an oil solvent) and subsequently converting the resultant phase into an aqueous system to perform emulsification due to the phase conversion; an interfacial polymerization method of causing a polymerization reaction in an interface between an organic phase and an aqueous phase to perform micro-encapsulation; a so-called in-situ polymerization method of dissolving or disposing a wall forming material only in the organic phase to form micro-capsules; and a core salvation method of changing a pH, a temperature, a density and the like of an aqueous polymer solution to separate a concentrated polymer phase, and forming micro-capsules. After the formation of the micro-capsules, a process of removing the oil solvent is added. An average particle diameter of the colorant-containing resin obtained as described above is preferably in a range of 0.01 to 2.0 μm, more preferably 0.05 to 1 μm.

As the resin, a copolymer of a hydrophilic monomer having a hydrophilic group and a hydrophobic monomer having a hydrophobic group and a salt of the copolymer are exemplified. As the monomer having an anionic hydrophilic group, a sulfonic acid-based monomer and a carboxylic acid-based monomer are usually exemplified. Examples of the sulfonic acid-based monomer include styrenesulfonic acid and a salt thereof as well as vinylsulfonic acid and a salt thereof. Examples of the carboxylic acid-based monomer include an α,β-ethylenic unsaturated carboxylic acid, an α,β-ethylenic unsaturated carboxylic acid derivative, acrylic acid, an acrylic acid derivative, methacrylic acid, a methacrylic acid derivative, maleic acid, a maleic acid derivative, itaconic acid, an itaconic acid derivative, phthalic acid and a phthalic acid derivative.

Examples of the hydrophobic monomer include styrene, a styrene derivative, vinyltoluene, a vinyltoluene derivative, vinylnaphthalene, a vinylnaphthalene derivative, butadiene, a butadiene derivative, isoprene, an isoprene derivative, ethylene, an ethylene derivative, propylene, a propylene derivative, an alkyl ester of acrylic acid, and an alkyl ester of methacrylic acid.

Moreover, examples of the salt of the copolymer of the hydrophilic monomer and the hydrophobic monomer include onium salts such as an alkaline metal salt, an ammonium salt, an organic ammonium salt, a phosphonium salt, a sulfonium salt, an oxonium salt, a stibonium salt, a stannonium salt and an iodonium salt, but are not limited thereto. Furthermore, a polyoxyethylene group, a hydroxyl group or the like may be introduced into the copolymer or the salt thereof. Furthermore, the copolymer or the salt thereof may appropriately be copolymerized with any of acrylamide, an acrylamide derivative, dimethylaminoethyl methacrylate, ethoxyethyl methacrylate, butoxyethyl methacrylate, ethoxytriethylene methacrylate, methoxypolyethylene glycol methacrylate, vinyl pyrrolidone, vinylpyridine, vinyl alcohol and alkyl ether.

(2) The pigment

As the pigment, conventionally known pigments such as carbon black and an organic pigment can be used.

Moreover, when a Bk ink is prepared, a self-dispersible carbon black is preferably used in which at least one hydrophilic group is bonded to the surface of carbon black directly or via another atomic group. That is, when the self-dispersible carbon black is used, no dispersant for dispersing the pigment in the ink is added, or its addition amount can remarkably be reduced. As the dispersant, a conventionally known water-soluble polymer or the like is usually used, but such a polymer is sometimes deposited on the ink ejection surface of the ink jet recording head to deteriorate the ink ejection stability. However, when the self-dispersible carbon black is used as the pigment, a content of such a polymer in the ink may be zero, or it can be remarkably reduced. As a result, the ejection stability during ink jet recording can further be improved.

Next, the self-dispersible carbon black suitable for the ink of the present invention will be described in detail. The self-dispersible carbon black is preferably ionic. For example, the anionically charged carbon black can suitably be used. An example of the anionically charged carbon black is a carbon black to whose surface the following hydrophilic group is bonded:

$$-COO(M2),\ -SO_3(M2),\ -PO_3H(M2)\ \text{and}\ -PO_3(M2)_2$$

(wherein, M2 represents a hydrogen atom, an alkali metal, ammonium or an organic ammonium.)

Above all, the anionically charged carbon black to whose surface -COO(M2) or $-SO_3(M2)$ is bonded has excellent self-dispersible properties, and therefore this kind of carbon black is particularly suitably used in the present invention.

In this regard, typical examples of the alkali metal among the substituents represented by "M2" in the hydrophilic group include Li, Na, K, Rb and Cs, and typical examples of the organic ammonium include methyl ammonium, dimethyl ammonium, trimethyl ammonium, ethyl ammonium, diethyl ammonium, triethyl ammonium, monohydroxy methylamine, dihydroxy methylamine, trihydroxy methylamine, ethanol ammonium, diethanol ammonium and triethanol ammonium.

An example of a method of manufacturing the anionically charged self-dispersible carbon black is a method of oxidizing the carbon black with sodium hypochlorite, and according to this method, a -COONa group can chemically be bonded to the surface of the carbon black.

(3) The compound (I) represented by the following general formula (I) or the compound (II) represented by the following general formula (II):

General formula (I)

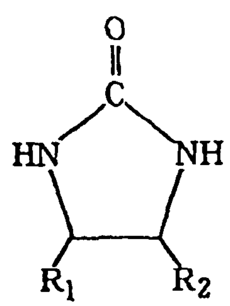

General formula (II)

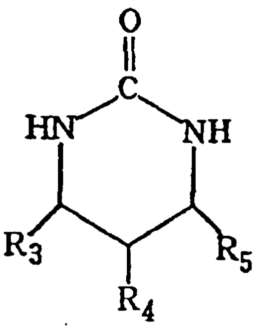

wherein $R_1$ to $R_5$ are independently each a hydrogen atom, $CH_3$ or $C_2H_5$.

Typical examples of the compound represented by the general formula (I) include ethylene urea (2-imidazolidinone), 4,5-dimethyl-2-imidazolidinone and 4,5-diethyl -2-imidazolidinone. A typical example of the compound represented by the general formula (II) is propylene urea. The compounds (I) and (II) may be used alone or in a combination thereof. The ink preferably contains at least one of the compounds (I) and (II) in an amount of 5 to 15 wt% based on the total weight of the ink.

(4) The polyhydric alcohol

Examples of the polyhydric alcohol which is preferably present in a range of 0.1 to 10 wt% include diols, triols and glycols. Particularly preferable are propylene glycol, 1,5-pentanediol, 1,2,6-hexanetriol and hexylene glycol. At least one of them is used.

In the ink according to another embodiment of the present invention, the colorant-containing resin fine particles and the pigment fine particles are included, and in this case, the colorant-containing resin fine particles have the cationic hydrophilic group, and the pigment fine particles have the cationic hydrophilic group or they are dispersed with a dispersant having the cationic hydrophilic group. These constituting materials will be described hereinafter.

(5) The colorant-containing resin fine particles having the cationic hydrophilic group

In the ink of this embodiment, the colorant-containing resin fine particles having the cationic hydrophilic group are used. First, examples of the colorant-containing resin fine particles include a resin containing the encapsulated colorant; and an aqueous dispersion of a resin having the cationic group which contains an emulsified colorant obtained by dispersing or dissolving the dye or the pigment in the oil solvent. Particularly, the resin including the encapsulated colorant is preferable. The resin including the encapsulated colorant is a resin dispersion obtained by dissolving or dispersing the colorant in the oil solvent, emulsifying and dispersing it in water, and further encapsulating it by a known appropriate method. In this case, the colorant described in the above paragraph (1) can be used.

In order to obtain the colorant-containing resin fine particles having the cationic hydrophilic group, the monomer having the following cationic group may be used to synthesize the polymer and its salt. Examples of the monomer having the cationic group include N,N-dimethylaminoethyl methacrylate [$CH_2$=C($CH_3$)-COO-$C_2H_4$N($CH_3$)$_2$], N, N-dimethylaminoethyl acrylate [$CH_2$=CH-COO-$C_2H_4$N($CH_3$)$_2$], N,N-dimethylaminopropyl methacrylate [$CH_2$=C($CH_3$) -COO-$C_3H_6$N($CH_3$)$_2$], N,N-dimethylaminopropyl acrylate [$CH_2$=CH-COO-$C_3H_6$N($CH_3$)$_2$], N,N-dimethylacrylamide [$CH_2$=CH-CON($CH_3$)$_2$], N,N-dimethylmethacrylamide [$CH_2$=C($CH_3$)-CON($CH_3$)$_2$], N,N-dimethylaminoethylacrylamide [$CH_2$=CH-CONH$C_2H_4$N($CH_3$)$_2$], N,N-dimethylaminoethylmethacrylamide [$CH_2$=C($CH_3$)-CONH$C_2H_4$N($CH_3$)$_2$], N,N-dimethylaminopropylacrylamide [$CH_2$=CH-CONH-$C_3H_6$N($CH_3$)$_2$] and N,N-dimethylaminopropylmethacrylamide [$CH_2$=C($CH_3$)-CONH-$C_3H_6$N($CH_3$)$_2$].

Moreover, as the compound for forming the salt, in case of a tertiary amine, there is used hydrochloric acid, sulfuric acid, acetic acid or the like. As the compound for forming the salt of a quaternary amine, there is used methyl chloride, dimethylsulfuric acid, benzyl chloride, epichlorohydrin or the like.

(6) (i) the pigment having the cationic hydrophilic group, and (ii) the pigment dispersion in which the pigment fine particles are dispersed with the dispersant having the cationic hydrophilic group

(i) The pigment having the cationic hydrophilic group

As the pigment for use in the ink of the present invention, a conventinally known carbon black and an organic pigment can be used without any problem. Particularly preferably, a self-dispersible carbon black is used in which at least one cationic hydrophilic group is bonded to the surface of carbon -black directly or via another atomic group. As a cationically charged carbon black, for example, there is a carbon black to whose surface at least one selected from the following cationic groups is bonded.

$$-SO_2\overset{+}{N}H_3,$$

$$-SO_2\overset{+}{N}H_2COR,$$

$$-\overset{+}{N}H_3,$$

$$-\overset{+}{N}R_3,$$

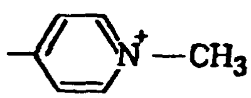
,

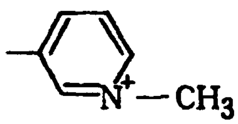
,

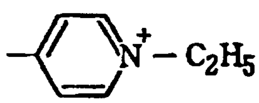
,

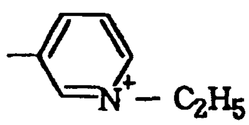
,

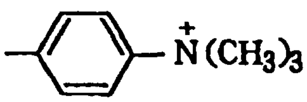
,

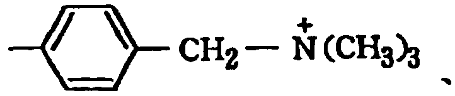

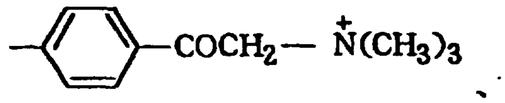

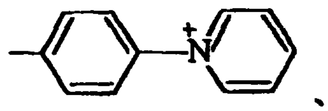

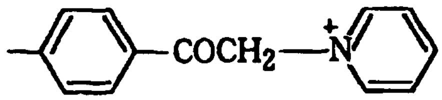

In the above formulae, R represents a straight-chain or a branched alkyl group having 1 to 12 carbon atoms, a substituted or an unsubstituted phenyl group, or a substituted or an unsubstituted naphthyl group.

In this regard, the cationic hydrophilic group may directly be bonded to the surface of the carbon black, or may indirectly be bonded to the surface of the carbon black by interposing another atomic group between the surface of the carbon black and the hydrophilic group. Typical examples of the atomic group include a straight-chain or a branched alkylene group having 1 to 12 carbon atoms, a substituted or an unsubstituted phenylene group, and a substituted or an unsubstituted naphthylene group. Here, as the substituent of the phenylene group or the naphthylene group, for example, there is a straight-chain or a branched alkyl group having 1 to 6 carbon atoms. Moreover, typical examples of a combination of the other atomic group and the hydrophilic group include - $C_2H_4$-COOM, -Ph-$SO_3$M and -Ph-COOM (wherein M represents a hydrogen atom, an alkali metal, ammonium or an organic ammonium, and Ph represents a phenylene group).

Moreover, two or more carbon blacks may appropriately be selected from the aforementioned self-dispersible carbon blacks and then used as ink coloring materials. Furthermore, an amount of the self-dispersible carbon black to be added in the ink is preferably in a range of 0.1 to 15 % by weight, more preferably in a range of 1 to 10 % by weight with respect to the total weight of the ink. In this range, the self-dispersible carbon black can maintain a sufficient dispersion state in the ink.

(ii) The pigment dispersion in which the pigment fine particles are dispersed with the dispersant having the cationic hydrophilic group

In the ink of the present embodiment, there may be used not only the aforementioned pigment having the cationic hydrophilic group but also a pigment dispersion in which a pigment such as the above-mentioned known carbon black is dispersed with the dispersant having the cationic group. Examples of the pigment dispersant having the cationic hydrophilic group will be described hereinafter, but the cationic dispersants usable in the present invention are not limited to these examples.

The examples of the cationic dispersant include a cationic polymer dispersant which is obtained by polymerization of a vinyl monomer and which uses cationic monomer as a monomer constituting at least a part of the obtained polymer, and an amine salt type or a quaternary ammonium salt type cationic surface active agent.

Examples of the cationic monomer for use herein include N,N-dimethylaminoethyl methacrylate [$CH_2$=C($CH_3$)-COO-$C_2H_4N(CH_3)_2$], N,N-dimethylaminoethyl acrylate [$CH_2$=CH-COO-$C_2H_4N(CH_3)_2$], N, N-dimethylaminopropyl methacrylate [$CH_2$=C($CH_3$)-COO-$C_3H_6N(CH_3)_2$], N,N-dimethylaminopropyl acrylate [$CH_2$=CH-COO-$C_3H_6N(CH_3)_2$], N,N-dimethylacrylamide [$CH_2$=CH-CON($CH_3$)$_2$]; N,N-dimethylmethacrylamide [$CH_2$=C($CH_3$)-CON($CH_3$)$_2$], N,N-dimethylaminoethylacrylamide [$CH_2$=CH-CONH$C_2H_4N(CH_3)_2$], N,N-dimethylaminoethylmethacrylamide [$CH_2$=C($CH_3$)-CONH$C_2H_4N(CH_3)_2$], N,N-dimethylaminopropylacrylamide [$CH_2$=CH-CONH-$C_3H_6N(CH_3)_2$] and N,N-dimethylaminopropylmethacrylamide [$CH_2$=C($CH_3$)-CONH-$C_3H_6N(CH_3)_2$].

In the case of a tertiary amine, as a compound for forming the salt, there is used hydrochloric acid, sulfuric acid or acetic acid. As a compound for the formation of a quaternary amine, there is used methyl chloride, dimethylsulfuric acid, benzyl chloride or epichlorohydrin. Among these compounds, methyl chloride and dimethylsulfuric acid are preferable in preparing the pigment dispersant for use in a second aspect of the present invention. The tertiary amine salt or the ammonium compound acts as a cation in water, and under the conditions of neutralization, its acidic state is in a stable dissolution range. A content of these monomers in the polymer is preferably in a range of 20 to 60 % by weight.

Examples of other monomers for use in constituting the cationic polymer dispersant include 2-hydroxyethyl methacrylate, an acrylic ester having a hydroxyl group such as an acrylic ester having a long ethylene oxide chain as a side chain, and hydrophobic monomers such as styrene-based monomers. Moreover, examples of the water-soluble monomer soluble in water in the vicinity of pH 7 include acrylamides, vinyl ethers, vinyl pyrrolidones, vinylpyridines and vinyl oxazolines.

Moreover, as the hydrophobic monomer, there are used hydrophobic monomers such as styrene, styrene derivatives, vinylnaphthalene, vinylnaphthalene derivatives, alkyl esters of (meth)acrylic acid and acrylonitrile. In the polymer dispersant obtained by the copolymerization, the water-soluble monomer is used in a range of 15 to 35 % by weight in order to allow the copolymer to steadily exist in an aqueous solution, and the hydrophobic monomer is preferably used in a range of 20 to 40 % by weight in order to enhance a dispersion effect to the copolymer pigment.

When the cationic water-soluble polymer is used as the dispersant to disperse the pigment, a pigment whose isoelectric point is adjusted to 6 or more is preferable from the viewpoint of physical properties. Moreover, a pigment having a neutral or a basic pH of a simple water dispersion which characterizes the pigment, for example, a pigment having a pH of 7 to 10 is preferable from the viewpoint of dispersion properties. This is understood to be due to the fact that an ionic interacting force of the pigment and the cationic water-soluble polymer is strong. In order to obtain the aqueous dispersion of the pigment fine particles by the use of the aforementioned materials, for example, the carbon black is subjected to a premixing treatment in a cationic dispersant solution, milled by a dispersing device having a high shear rate, diluted, and then subjected to a centrifugal separating treatment to remove coarse particles. Subsequently, materials for a desired ink prescription are added, and an aging treatment is then carried out as occasion demands. Thereafter, the aqueous dispersion of the carbon black can be obtained by performing the centrifugal separating treatment to finally obtain the pigment dispersion having a desired average particle diameter. The pH of the aqueous dispersion of the ink prepared in this manner is preferably in a range of 3 to 7.

The physical properties of the ink of the present invention formed of the aforementioned constituting materials can appropriately be controlled, but a viscosity of the ink is preferably 10 cps or less, and a surface tension of the ink is preferably in a range of 30 to 50 mN/m (dyne/cm) in order to obtain a stable ejection.

Next, other concrete examples of a recording apparatus and a recording head preferably usable in the present invention will be described. Fig. 1 is a schematic perspective view showing a main part of a liquid ejection head of an ejection system for connecting a bubble to the atmosphere during ejection according to the present invention and showing one example of an ink jet printer as a liquid ejection apparatus using the head.

In Fig. 1, the ink jet printer includes: a conveyor 1030 for intermittently conveying a sheet 1028 as a recording material in a direction shown by an arrow P in Fig. 9, the conveyor being disposed along a logitudinal direction in a casing 1008; a recorder 1010 reciprocating substantially parallel to a direction S crossing at right angles to the conveying direction P of the sheet 1028 by the conveyor 1030; and a movement actuator 1006 as driving means for reciprocating the recorder 1010.

The movement actuator 1006 includes: a belt 1016 wound around pulleys 1026a and 1026b disposed on rotation shafts disposed opposite to each other at a predetermined interval; and a motor 1018 for driving the belt 1016 disposed substantially parallel to roller units 1022a and 1022b and connected to a carriage member 1010a of the recorder 1010 in forward and backward directions.

When the motor 1018 is operated and the belt 1016 is rotated in a direction of an arrow R in Fig. 1, the carriage member 1010a of the recorder 1010 is moved by a predetermined movement amount in the direction of the arrow S in Fig. 1. Moreover, when the motor 1018 is operated and the belt 1016 rotates in a direction opposite to the direction of arrow R in Fig. 1, the carriage member 1010a of the recorder 1010 is moved by the predetermined movement amount in a direction opposite to the direction of arrow S in Fig. 1. Furthermore, a recovery unit 1026 for performing an ejection recovery treatment of the recorder 1010 is disposed opposite to an ink ejection port array of the recorder 1010 at a home position of the carriage member 1010a on one end of the movement actuator 1006.

In the recorder 1010, ink jet cartridges (hereinafter referred to simply as cartridges) 1012Y, 1012M, 1012C and 1012B are detachably attached to the carriage member 1010a for respective colors of yellow, magenta, cyan and black.

Fig. 2 shows one example of the ink jet cartridge which can be mounted on the ink jet recording apparatus. A cartridge 1012 in the present example is of a serial type, and its main part is constituted of an ink jet recording head 100 and a liquid tank 1001 for containing ink and another liquid.

In the ink jet recording head 100 a multiplicity of ejection ports 832 for ejecting the liquid are formed, and the liquids such as the ink are guided to a common liquid chamber (see Fig. 3) of the ink jet recording head 100 from the liquid tank 1001 via a liquid feed passage (not shown). In the cartridge 1012, the ink jet recording head 100 is integrally formed with the liquid tank 1001, and the liquid tank 1001 can be replenished with the liquid as occasion demands, but the liquid tank 1001 may be replaceably connected to the ink jet recording head 100.

The concrete example of the liquid ejection head which can be mounted on the ink jet printer constituted as described above will be described hereinafter in more detail.

Fig. 3 is a schematic perspective view showing a main part of the liquid ejection head according to a basic embodiment of the present invention, and Figs. 4 to 7 are front views showing an ejection port shape of the liquid ejection head shown in Fig. 3. In this regard, an electric wiring, and the like for driving an electrothermal conversion member is omitted.

As the liquid ejection head of the present example, for example, a substrate 934 formed of glass, ceramic, plastic or metal is used as shown in Fig. 3. The substrate material is not intrinsic in the present invention, and is not particularly limited as long as the material functions as a part of a channel constituting member and can function as a support for an ink ejection energy generating element and a material layer for forming a liquid channel and ejection port which will be described later. In the present example, therefore, the use of an Si substrate (wafer) will be described. The ejection port may be formed by a method using laser light, or may be formed by using an orifice plate (ejection port plate) 935 of, for example, photosensitive resin as described later with exposure devices such as a mirror projection aligner (MPA).

In Fig. 3, the substrate 934 is provided with an electrothermal conversion member (hereinafter referred to also as a heater) 931 and an ink feed port 933 of a long groove shaped through port as the common liquid chamber, and one row of heaters 931 as heat energy generating means is disposed on each side of the longitudinal direction of the ink feed port 933 in such a manner that the electrothermal conversion members are arranged in a zigzag manner at an interval, for example, of 300 dpi. An ink channel wall 936 is disposed on the substrate 934 to form an ink channel. The ink channel wall 936 is further provided with the ejection port plate 935 provided with ejection ports 832.

In Fig. 3 the ink channel wall 936 and ejection port plate 935 are shown as separate members, but the ink channel wall 936 and ejection port plate 935 can simultaneously be formed as the same member by forming the ink channel wall 936 on the substrate 934, for example, by a spin coat technique. In the present example, an ejection port surface (top surface) 935a is further subjected to a water repellent treatment.

In the present example, the serial type head for scanning in the direction of arrow S of Fig. 1 to perform recording is used, so that the recording is performed, for example, at 1200 dpi. A drive frequency is 10 kHz, and one ejection port performs ejection every shortest time interval of 100 μs.

Moreover, as one example of actual head size, for example, as shown in Fig. 4, a partition wall 936a for hydrostatically partitioning adjacent nozzles has a width of w = 14 μm. As shown in Fig. 7, for a bubbling chamber 1337 formed by the ink channel wall 936, $N_1$ (width of the bubbling chamber) = 33 μm, $N_2$ (length of the bubbling chamber) = 35 μm. A size of heater 931 is 30 μm × 30 μm, heater resistivity is 53 Ω, and drive voltage is 10.3 V. Moreover, the ink channel wall 936 and partition wall 936a have a height of 12 μm, and an ejection port plate thickness of 11 μm can be used.

For a cross section of an ejection port portion 940 disposed in the ejection port plate including the ejection port 832, the cross section cut in a direction intersecting an ink ejection direction (thickness direction of the orifice plate 935) substantially has a star shape, and as shown in Fig. 5, the shape is substantially constituted of six rise or projected portions 832a having a obtuse angle, and six fall or recessed portions 832b disposed alternately with the rise portion 832a and having an acute angle. Specifically, six grooves are formed in the orifice plate thickness direction (liquid ejection direction) shown in Fig. 3, in which grooves the fall portion 832b locally distant from the center O of the ejection port is set as the top thereof and the rise portion 832a locally close to the center O of the ejection port is set as a base (for the position of the groove, see 1141a in Fig. 8).

In the present example, for the ejection port portion 940, for example, the cross section cut along the direction intersecting the thickness direction has a shape of two equilateral triangles with one side of 27 μm which are rotated by 60 degrees and combined, and a size $T_1$ shown in Fig. 5 is 8 μm. Angles of the rise portions 832a are all 120 degrees, and the angles of the fall portions 832b are all 60 degrees.

Therefore, the ejection port center O agrees with a gravity center G of a polygon formed by connecting adjacent groove center portions to each other (center (gravity center) of a diagram formed by connecting the groove top and two bases adjacent to the top). An opening area of the ejection port 832 of the present example is 400 $\mu m^2$, and the opening area (area of the diagram formed by connecting the groove top to two bases adjacent to the top) of one groove is about 33 $\mu m^2$.

Fig. 6 is a schematic view showing an ink adhesion state of the ejection port portion shown in Fig. 5.

A liquid ejecting operation by the ink jet recording head constituted as described above will next be described with reference to Figs. 8 to 15.

Figs. 8 to 15 are sectional views showing the liquid ejecting operation of the liquid ejection head shown in Figs. 3 to 7, and are sectional views along line X-X of the bubbling chamber 1337 shown in Fig. 7. An end of the ejection port portion 940 in the thickness-wise direction of the orifice plate in the cross section constitutes the top 1141a of a groove 1141.

Fig. 8 shows a state that a film-like bubble is generated on the heater, Fig. 9 shows a state about 1 μs after the state in Fig. 8, Fig. 10 shows a state about 2 μs after Fig. 8, Fig. 11 shows a state about 3 μs after Fig. 8, Fig. 12 shows a state about 4 μs after Fig. 8, Fig. 13 shows a state about 5 μs after Fig. 8, Fig. 14 shows a state about 6 μs after Fig. 8, and Fig. 15 shows a state about 7 μs after Fig. 8. In the following description, "fall", "drop", or "sink" does not mean falling in a gravitation direction, but means movement in a direction of the electrothermal conversion member regardless of the installing direction of a head.

First, as shown in Fig. 8, when a bubble 101 is generated in a liquid channel 1338 on the heater 931 with energization of the heater 931 based on a recording signal, and the like, the bubble rapidly expands its volume and grows for about 2 μs as shown in Figs. 9 and 10. The height of the bubble 101 in its maximum volume is higher than that of the ejection port surface 935a, but in this case, the pressure of the bubble decreases to from several fractions to ten and odds of fractions of the atmospheric pressure.

Subsequently, the volume of the bubble 101 turns from the maximum volume to a decreased volume about 2 μs after the generation of the bubble 101 as described above, but substantially simultaneously a meniscus 102 starts to be formed. As shown in Fig. 11, the meniscus 102 moves backward, that is, falls to the side of the heater 931 as shown in Fig. 11.

Here, in the present example, a plurality of grooves 1141 are dispersed in the ejection port portion. When the meniscus 102 moves backward, a capillary force acts in a direction $F_C$ opposite to a meniscus backward direction $F_M$ in a part of the groove 1141. As a result, even if a slight dispersion is recognized on the state of the bubble 101 for some cause, a shape of meniscus or main ink droplet (hereinafter referred to as liquid or ink in some cases) 1a during retreat of meniscus is corrected in such a manner that the shape is substantially symmetrical with respect to the ejection port center.

In the present example, since fall speed of the meniscus 102 is faster than shrinkage speed of the bubble 101, as shown in Fig. 12, the bubble 101 communicates with the atmosphere in the vicinity of the lower surface of the ejection port 832 about 4 μs after the bubble generation as shown in Fig. 12. In this case, the liquid (ink) in the vicinity of a center axis of the ejection port 832 sinks toward the heater 931. This is because the liquid (ink) 1a drawn back toward the heater 931 by a negative pressure of the bubble 101 before communicating with the atmosphere holds its speed in a surface direction of heater 931 by inertia even after the communication of the bubble 101 with the atmosphere.

The liquid (ink) having sunk toward the heater 931 reaches the surface of the heater 931 about 5 μs after the generation of the bubble 101 as shown in Fig. 13, and spreads to cover the surface of the heater 931 as shown in Fig. 14. The liquid having spread to cover the surface of the heater 931 as described above has a vector in a horizontal direction along the surface of the heater 931, but a vector intersecting the surface of the heater 931, for example, in a vertical direction disappears and the liquid tries to stay on the surface of the heater 931. An upside liquid, that is, a liquid keeping a speed vector in the ejection direction is pulled in a downward direction.

Thereafter, a liquid portion 1b between the liquid spread on the surface of the heater 931 and the upside liquid (main liquid droplet) gradually becomes thin, the liquid portion 1b is cut in the middle of the surface of the heater 931 about 7 μs after the generation of the bubble 101 as shown in Fig. 15, and the portion is separated into the main liquid droplet keeping the speed vector in the ejection direction and a liquid 1c spread on the surface of the heater 931. As described above, a separation position is preferably inside the liquid channel 1338, more preferably on the side of the electrothermal conversion member 931 rather than on the side of the ejection port 832.

The main liquid droplet 1a has no deviation in the ejection direction, is ejected from the middle portion of the ejection port 832 without ejection torsion, and reaches a predetermined position in a recording material surface. Moreover, the liquid 1c spread on the surface of the heater 931 has heretofore flied as a satellite droplet to follow the main liquid droplet, but the liquid stays on the surface of the heater 931 and fails to be ejected.

Since the satellite droplet can be inhibited from being ejected in this manner, a splash due to the ejection of the satellite droplet can be prevented from occuring, and the recording surface of the recording material can securely be prevented from becoming dirty owing to floating mist. In this regard, in Figs. 12 to 15, 1d denotes an ink (ink in the groove) adhering to the groove portion, and 1e denotes an ink remaining in the liquid channel.

As described above, in the liquid ejection head of the present example, when the liquid is ejected at a volume decrease stage after the bubble grows to its maximum volume, the ejection direction of the main liquid droplet during ejection can be stabilized by a plurality of grooves dispersed with respect to the center of the ejection port. As a result, the liquid ejection head without torsion in the ejection direction and with a high range precision can be provided. Moreover, since ejection can steadily be performed even with bubbling dispersion at a high drive frequency, high-speed high-minuteness printing can be realized.

Particularly, the bubble fails to communicate with the atmosphere until the stage at which the bubble volume decreases, and the liquid is then ejected. Thereby, the mist generated when the bubble communicates with the atmosphere and the liquid droplet is ejected can be prevented. Therefore, the adhesion of the liquid droplet to the ejection port surface, which causes so-called sudden non-ejection, can be inhibited.

Moreover, as another embodiment of the recording head of the ejection system of connecting the bubble to the atmosphere during ejection, which can preferably be used in the present invention, for example, Japanese Patent No. 2783647 discloses a so-called edge shooter type.

According to the present invention, for an ink jet recording system, superior effects are brought particularly on a recording head or a recording apparatus of an ink jet system in which heat energy is utilized to form a flying liquid droplet, and recording is performed.

For the typical constitution and principle of the ink jet recording, a basic principle disclosed, for example, in U.S. Patent Nos. 4,723,129 and 4,740,796 is preferably used. The system can be applied to either one of an on-demand type and a continuous type. The system is effective particularly for the on-demand type because this type comprises: applying, to the electrothermal conversion member disposed opposite to a sheet with the liquid (ink) held thereon or a liquid path, at least one drive signal corresponding to recording information and giving a rapid temperature rise to exceed nucleus boiling; generating heat energy in the electrothermal conversion member; and causing film boiling on the heat acting surface of the recording head, so that the bubble in the liquid (ink) having one-to-one correspondence to the drive signal can be formed as a result. The liquid (ink) is ejected via an ejecting opening by the bubble growth and shrinkage, and at least one droplet is formed. When the drive signal is provided with a pulse shape, the bubble growth/shrinkage is instantly and appropriately performed, and particularly the ejection of the liquid (ink) superior in response can preferably be achieved.

As the pulse-shaped drive signal, the signals disclosed in U.S. Patent Nos. 4,463,359 and 4,345,262 are preferable. When the conditions disclosed in U.S. Patent No. 4,313,124 of the invention regarding a temperature rise ratio of the heat acting surface are employed, further superior recording can be performed.

As to the constitution of the recording head, the present invention includes, in addition to a combination constitution (linear liquid channel or right-angled liquid channel) of the ejection port, channel, and electrothermal conversion member as disclosed in the aforementioned specifications, the constitution as disclosed in U.S. Patent Nos. 4,558,333 and 4,459,600, which disclose that a heat acting portion is disposed in a bent area.

Additionally, the present invention is also effective for the constitution based on Japanese Patent Application Laid-Open No. 59-123670 which discloses that a slot common with respect to a plurality of electrothermal conversion members is used as the ejection portion of the electrothermal conversion member or Japanese Patent Application Laid-Open No. 59-138461 which discloses that an opened hole for absorbing a heat energy pressure wave is disposed opposite to the ejection portion.

Furthermore, as a full line type recording head having a length in accordance with a maximum width of the recording material on which the recording apparatus can perform recording, either one of a constitution in which the length is satisfied by a combination of a plurality of recording heads disclosed in the aforementioned specifications, and a constitution as one recording head integrally formed may be used, and the present invention can further effectively fulfill the aforementioned effect.

In addition, the present invention is effective even when an exchangeable chip type recording head, mounted on an apparatus main body, enabling electric connection with the apparatus main body or ink feed from the apparatus main body, or a cartridge type recording head provided with the ink tank integral with the recording head itself is used.

Moreover, when recovery means, preliminary assisting means, and other means are added to the recording head as the constitution of the recording apparatus of the present invention, the effect of the present invention can further be stabilized. As typical examples, capping means for the recording head, cleaning means, heating or suction means, preliminary heating means comprised of the electrothermal conversion member, a separate heating element or a combination of these elements, and a preliminary ejection mode of performing ejection separately from recording are also effective to perform stable recording.

Furthermore, as the recording mode of the recording apparatus, not only the recording mode only of a main color such as black, but also an integrally constituted recording head or a combination of a plurality of recording heads may also be used. The present invention is remarkably effective even for an apparatus with a plurality of different colors and/or with a full color by mixed color.

In the aforementioned embodiment of the present invention, the ink has been described as the liquid. The ink may be solidified at a room temperature or a lower temperature, but it becomes softened at a room temperature, or liquefied. Moreover, in the aforementioned ink jet system, it is general to adjust the temperature of the ink itself in a range of 30 to 70°C in such a manner that ink viscosity is placed in a stable ejection range. Therefore, the ink may be such one that is liquefied during application of the recording signal.

Additionally, the temperature rise due to the thermal or heat energy may be positively prevented by using the temperature rise as energy to change the state of ink from a solid state to a liquid state, or an ink which solidifies when

left to stand may be used for the purpose of preventing the ink from being evaporated. In either case, the ink may be used in the present invention which is liquefied by applying the heat energy in accordance with the recording signal and ejected as a liquid ink. Furthermore, use of an ink which is liquefied only by the heat energy, such as an ink which already starts to be solidified when reaching the recording material, may also be applied to the present invention. In this case, as disclosed in Japanese Patent Application Laid-Open Nos. 54-56847 and 60-71260, while the ink is held as a liquid or solid material in a recess portion or a through hole of porous sheet, the ink may be disposed opposite to the electrothermal conversion member. The present invention is most effective with respect to the aforementioned inks when the aforementioned film boiling system is executed.

Furthermore, as the mode of the recording apparatus of the present invention, an integrally or separately disposed image output terminal of information processing apparatuses such as a word processor and a computer, a copying apparatus combined with a reader, and a facsimile apparatus provided with a transmission/reception function may be employed.

The liquid ejection apparatus on which the aforementioned liquid ejection head is mounted will next be described in general.

Fig. 16 is a schematic perspective view of an ink jet recording apparatus 600 as one example of a liquid ejection apparatus to which the liquid ejection head of the present invention can be attached and applied.

In Fig. 16, an ink jet head cartridge 601 is constituted by uniting the aforementioned liquid ejection head and the ink tank for holding the ink to be supplied to the liquid ejection head. The ink jet head cartridge 601 is mounted on a carriage 607 which meshes with a helical groove 606 of a lead screw 605 rotating in cooperation with forward/backward rotation of a drive motor 602 via drive force transmission gears 603, 604, and is reciprocated in directions of arrows a, b along a guide 608 together with the carriage 607 by power of the drive motor 602. A recording material P is conveyed on a platen roller 609, and pressed against the platen roller 609 over the moving direction of the carriage 607 by a sheet press plate 610.

Photocouplers 611, 612 are disposed in the vicinity of one end of the lead screw 605. These constitutes home position detecting means for confirming the presence of a lever 607a of the carriage 607 in this area to perform rotation direction switch or the like of the drive motor 602.

A support member 613 supports a cap member 614 for covering a front surface (ejection port surface) of the ink jet head cartridge 601 provided with the ejection port. Moreover, ink suction means 615 takes the ink which is empty-ejected from the ink jet head cartridge 601 and pooled inside the cap member 614. The ink suction means 615 performs suction recovery of the ink jet head cartridge 601 via an in-cap opening (not shown). A cleaning blade 617 for wiping the ejection port surface of the ink jet head cartridge 601 is disposed in such a manner that the blade can be moved forward and backward (in a direction crossing at right angles to the moving direction of the carriage 607) by a moving member 618. The cleaning blade 617 and moving member 618 are supported by a main body support 619. The cleaning blade 617 is not limited to this mode, and may be another known cleaning blade.

For a suction recovery operation of the liquid ejection head, a lever 620 for starting suction moves with movement of a cam 621 which meshes with the carriage 607, and the drive force from the drive motor 602 is controlled by known transmission means such as clutch change-over for movement control. An ink jet recording controller for giving a signal to a heating element disposed on the liquid ejection head of the ink jet head cartridge 601, or for performing drive control of the aforementioned respective mechanisms is disposed on an apparatus main body side, and is not shown in the drawing.

In the ink jet recording apparatus 600 constituted as described above, the ink jet head cartridge 601 reciprocates over the entire width of a recording material P' to perform recording on the recording material P' which is conveyed on the platen roller 609 by recording material conveying means (not shown).

As described above, according to the present invention, there is provided an ink which produces the image provided with high image density, superior rub resistance, water resistance, and marker resistance, which is also superior in intermittent ejection stability from the recording head during use in ink jet recording, and which can prevent printing torsion or ejection defect from being caused by the adhesion of the thickened material of the ink to the ejection port surface in the ink jet head.

[EXAMPLE]

The present invention will concretely be described hereinafter by way of Examples and Comparative Examples. In the following description, parts and % are on a basis of weight unless specified otherwise.

<Example 1>

(1) Preparation of anionic resin particles containing carbon black

The following materials were mixed and dispersed:

- Carbon black MCF-88 (manufactured by Mitsubishi Chemical Corp.) 20 parts
- Styreneacrylic acid (acid value 200, molecular weight 30,000) 40 parts
- Methyl ethyl ketone 40 parts

The mixture was subjected to phase reversal emulsification by the use of sodium hydroxide as a neutralizing agent, and the methyl ethyl ketone was then removed to finally obtain an aqueous dispersion of a carbon black-containing anionic resin having a solid content of 20 % and an average particle diameter of 0.10 micron.

As an anionic self-dispersible carbon black particle, self-dispersible carbon black CAB-O-JET 200 manufactured by Cabot Co. (whose solid content was 20 % and which had a sulfo group as a surface functional group) was prepared. This self-dispersible carbon black particles had a average particle diameter of 0.13 micron and a pH of 7.

(2) Preparation of an ink composition

The materials prepared as described above were used, and the ink of the following composition was prepared:

(Ink Composition of Example 1)

- Carbon black-containing anionic resin particles (using 15 ml of the above aqueous dispersion) 3.0 parts
- Anionic self-dispersible carbon black particles 3.0 parts
- Propylene urea 7.5 parts
- 1,2,6-hexanetriol 1.0 part
- Ion exchanged water 85.5 parts

<Example 2>

(1) Preparation of cationic resin particles containing carbon black

The following materials were mixed and dispersed:

- Carbon black MCF-88 (manufactured by Mitsubishi Chemical Corp.) 20 parts
- Styrene-N,N-dimethylaminoethyl methacrylate copolymer (molecular weight 45,000) 40 parts
- Methyl ethyl ketone 40 parts

The mixture was subjected to phase reversal emulsification by the use of acetic acid as a neutralizing agent, and the methyl ethyl ketone was then removed to finally obtain an aqueous dispersion of a carbon black-containing cationic resin having a solid content of 20 % and an average particle diameter of 0.10 micron.

The cationic self-dispersible carbon black particles were prepared as follows. That is, 10 g of carbon black having a surface area of 230 $m^2/g$ and a DBP oil absorption of 70 ml/100 g was well mixed with 3.06 g of 3-amino-N-ethyl pyridinium bromide in 72 g of water, and 1.62 g of nitric acid was then added dropwise, followed by stirring at 70°C. Further several minutes later, to the resultant mixture was added a solution in which 1.07 g of sodium nitrite was dissolved in 5 g of water, and the mixture was further stirred for one hour. The resultant slurry was filtered through a filter (trade name Toyo roshi No. 2; manufactured by Advantice Co.), and the pigment particles were sufficiently washed with water and then dried in an oven at 110°C. Afterward, water was further added to the pigment to prepare an aqueous pigment solution having a pigment concentration of 10%. A cationic property was introduced onto the surface of the carbon black by the aforementioned method.

(2) Preparation of an ink composition

The materials prepared as described above were used to prepare an ink of the following composition:

(Ink Composition of Example 2)

- Carbon black-containing cationic resin particles (using 15 ml of the above aqueous dispersion) 2.0 parts
- Cationic self-dispersible carbon black particles 4.0 parts
- Propylene urea 7.5 parts
- Propylene glycol 1.0 part
- Ion exchanged water 85.5 parts

<Example 3>

The colored resin fine particles and cationic self-dispersible carbon black particles as prepared in Example 2 were used to prepare an ink of the following composition:

(Ink Composition of Example 3)

- Carbon black-containing cationic resin particles (using 10 ml of the aqueous dispersion as prepared in Example 2) 2.0 parts
- Cationic self-dispersible carbon black particles 4.0 parts
- Glycerol 5.0 parts
- Ethylene urea 10.0 parts
- Ion exchanged water 79.0 parts

<Comparative Example 1>

The colored resin fine particles and cationic self-dispersible carbon black particles as prepared in Example 2 were used to prepare an ink of the following composition:

(Ink Composition of Comparative Example 1)

- Carbon black-containing cationic resin particles (using 10 ml of the aqueous dispersion as prepared in Example 2) 2.0 parts
- Cationic self-dispersible carbon black particle 4.0 parts
- Diethylene glycol 5.0 parts
- Ion exchanged water 89.0 parts

<Evaluation>

(Intermittent ejection stability evaluation method and evaluation standard)

The inks of Examples 1 to 3, Comparative Example 1 were used, and the intermittent ejection stability in the ink jet head was evaluated. Evaluation was performed on a Bk head of BC-60 using BJF-800 manufactured by Canon. A longitudinal ruled line was printed at a fixed interval of ejection halt time, and after the fixed halt time, the longitudinal ruled line formed by first ejection was visually evaluated on the following standard. Table 1 shows evaluation results for each halt time.

A : Normal printing is possible without any disorder in the longitudinal ruled line.
B : A slight disorder is confirmed in the longitudinal ruled line, but this level causes no problem in actual use.
C : Non-ejection and disorder are clearly confirmed in the longitudinal ruled line, and normal printing is impossible.

Table 1

| Evaluation results of intermittent ejection stability | | | | |
|---|---|---|---|---|
| | Halt Time (second) | | | |
| | 5 | 10 | 15 | 20 |
| Example 1 | A | A | B | B |
| Example 2 | A | B | B | B |
| Example 3 | A | A | A | B |
| Comparative Example 1 | C | C | C | C |

As apparent from Table 1, it has been confirmed that with the inks of Examples 1 to 3, normal ink ejection is possible even after the fixed ejection halt time and these inks are superior in the intermittent ejection stability.

(Ink re-solubility evaluation method and evaluation standard)

The inks of Examples 1 to 3 and Comparative Example 1 were used, and re-solubility of evaporated ink was evaluated. The evaluation comprised: evaporating 5.0 g of each test ink in a glass laboratory dish at 60°C for 15 hours; adding 2.5 g of each fresh test ink to the evaporated and thickened ink; leaving the ink to stand at a room temperature for one hour; and visually observing each ink state after one hour.

Table 2

| Evaluation results of ink re-solubility | |
|---|---|
| | Laboratory Dish State |
| Example 1 | No thickened material remains. |
| Example 2 | No thickened material remains. |
| Example 3 | No thickened material remains. |
| Comparative Example 1 | Thickened material remains. |

As apparent from Table 2, it has been confirmed that with the inks of Examples 1 to 3 no thickened material remains in the laboratory dish, and these inks are superior in the ink re-solubility of evaporated ink.

There is disclosed an ink for ink jet which produces a high quality level image, is superior in intermittent ejection stability from an ink jet recording head, and can inhibit printing distortion or ejection defect from being caused by a thickened material of the ink attached to an ejection port surface. The ink contains colorant-containing resin fine particles, pigment fine particles, at least one of a compound represented by the general formula (I) and a compound represented by the general formula (II), and a polyhydric alcohol:

General formula (I)

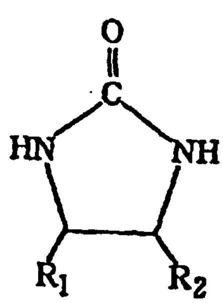

General formula (II)

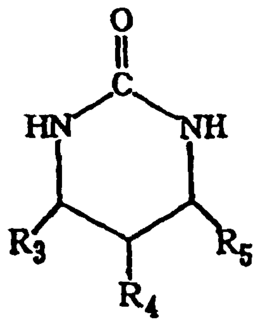

wherein $R_1$ to $R_5$ are independently each a hydrogen atom, $CH_3$ or $C_2H_5$.

## Claims

1. An aqueous ink composition for ink jet comprising a colorant-containing resin fine particle, a pigment fine particle and a polyhydric alcohol, said composition further comprising at least one of a compound represented by the following general formula (I) and a compound represented by the following general formula (II):

General formula (I)

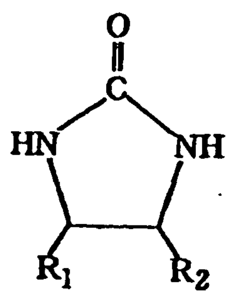

General formula (II)

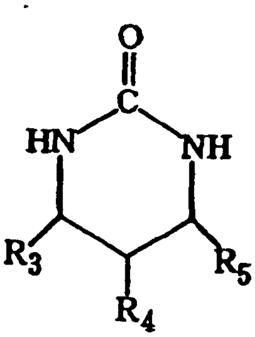

wherein $R_1$ to $R_5$ are independently each a hydrogen atom, $CH_3$ or $C_2H_5$.

2. The aqueous ink composition according to claim 1, wherein the pigment fine particle has a cationic hydrophilic group or the pigment fine particle is dispersed with a dispersant having a cationic hydrophilic group, and the resin fine particle has a cationic hydrophilic group.

3. The aqueous ink composition according to claim 1 or 2, wherein the pigment fine particle is self-dispersible carbon black to the surface of which at least one hydrophilic group is bonded directly or via another atomic group.

4. The aqueous ink composition according to claim 3, wherein said hydrophilic group is a cationic group.

5. The aqueous ink composition according to any one of claims 1 to 4, wherein the compound represented by said general formula (I) is contained in an amount of 5 to 15 wt% based on the total weight of the aqueous ink.

6. The aqueous ink composition according to any one of claims 1 to 5, wherein said polyhydric alcohol is at least one selected from the group consisting of glycerol, propylene glycol, 1,5-pentanediol, 1,2,6-hexanetriol, and hexylene glycol, and the amount of said polyhydric alcohol is in a range of 0.1 to 10 wt%.

7. Use of the aqueous ink composition according to any one of claims 1 to 6 for application in ink jet recording.

8. An ink cartridge comprising an ink container containing the aqueous ink according to any one of claims 1 to 6.

9. Use of an ink container containing the aqueous ink composition according to any one of claims 1 to 6 in a recording unit further comprising an ink jet head for ejecting the ink.

10. Use of an ink container containing the aqueous ink composition according to any one of claims 1 to 6 in an ink jet recording apparatus further comprising an ink jet head for ejecting the ink.

11. An ink jet recording method comprising a step of applying the aqueous ink composition according to any one of claims 1 to 6 to a recording medium by an ink jet process.

**Patentansprüche**

1. Wässrige Tintenzusammensetzung für Tintenstrahlen umfassend ein Farbmittel enthaltendes feines Harzteilchen, ein feines Pigmentteilchen und einen mehrwertigen Alkohol, wobei die Zusammensetzung des Weiteren wenigstens eine von der Verbindung, die durch die folgende allgemeine Formel (I) dargestellt wird, und der Verbindung, die durch die folgende allgemeine Formel (II) dargestellt wird, umfasst:

Allgemeine Formel (I)

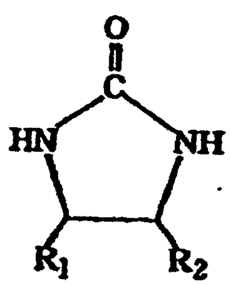

Allgemeine Formel (II)

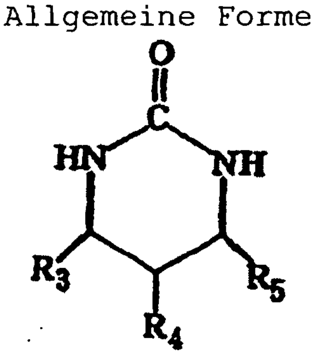

wobei $R_1$ bis $R_5$ unabhängig jeweils ein Wasserstoffatom, $CH_3$ oder $C_2H_5$ sind.

2. Wässrige Tintenzusammensetzung nach Anspruch 1, wobei das feine Pigmentteilchen eine hydrophile kationische Gruppe aufweist oder das feine Pigmentteilchen mit einem Dispergiermittel dispergiert ist, welches eine hydrophile kationische Gruppe aufweist, und wobei das feine Harzteilchen eine hydrophile kationische Gruppe aufweist.

3. Wässrige Tintenzusammensetzung nach Anspruch 1 oder 2, wobei das feine Pigmentteilchen selbst dispergierbarer Ruß ist, an dessen Oberfläche wenigstens eine hydrophile Gruppe direkt oder über eine weitere Atomgruppe gebunden ist.

4. Wässrige Tintenzusammensetzung nach Anspruch 3, wobei die hydrophile Gruppe eine kationische Gruppe ist.

5. Wässrige Tintenzusammensetzung nach einem der Ansprüche 1 bis 4, wobei die durch die allgemeine Formel (I) dargestellte Verbindung basierend auf dem Gesamtgewicht der wässrigen Tinte in einer Menge von 5 bis 15 Gewichtsprozent enthalten ist.

6. Wässrige Tintenzusammensetzung nach einem der Ansprüche 1 bis 5, wobei der mehrwertige Alkohol wenigstens einer ausgewählt aus der Gruppe bestehend aus Glycerin, Propylenglykol, 1,5-Pentandiol, 1,2,6-Hexantriol und Hexylenglykol ist und die Menge des mehrwertigen Alkohols im Bereich von 0,1 bis 10 Gewichtsprozent liegt.

7. Verwendung der wässrigen Tintenzusammensetzung nach einem der Ansprüche 1 bis 6 zum Aufbringen beim Aufzeichnen durch Tintenstrahlen.

8. Tintenkartusche umfassend einen Tintenbehälter, der die wässrige Tinte nach einem der Ansprüche 1 bis 6 enthält.

9. Verwendung eines Tintenbehälters, der die wässrige Tintenzusammensetzung nach einem der Ansprüche 1 bis 6 enthält, in einer Aufzeichnungseinheit, die des Weiteren einen Tintenstrahlkopf zum Ausstoßen der Tinte umfasst.

10. Verwendung eines Tintenbehälters, der die wässrige Tintenzusammensetzung nach einem der Ansprüche 1 bis 6 enthält, in einem Tintenstrahlaufzeichnungsgerät, das des Weiteren einen Tintenstrahlkopf zum Ausstoßen der Tinte umfasst.

11. Tintenstrahlaufzeichnungsverfahren mit einem Schritt des Aufbringens der wässrigen Tintenzusammensetzung nach einem der Ansprüche 1 bis 6 auf ein Aufzeichnungsmedium durch ein Tintenstrahlverfahren.

**Revendications**

1. Composition d'encre aqueuse pour jet d'encre, comprenant une fine particule de résine contenant du colorant, une fine particule de pigment et un alcool polyhydrique, ladite composition comprenant en outre au moins l'un d'un composé représenté par la formule générale (I) suivante et d'un composé représenté par la formule générale (II) suivante :

Formule générale (I)

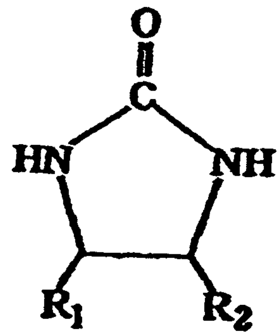

Formule générale (II)

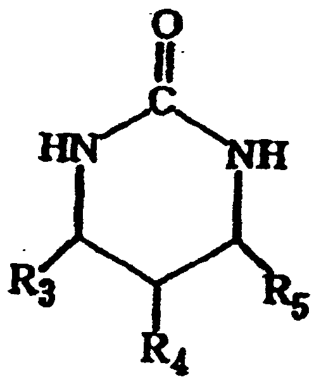

dans lesquelles $R_1$ à $R_5$ représentent chacun, indépendamment l'un de l'autre, un atome d'hydrogène, $CH_3$ ou $C_2H_5$.

2. Composition d'encre aqueuse selon la revendication 1, dans laquelle la fine particule de pigment possède un groupe hydrophile cationique ou la fine particule de pigment est dispersée avec un agent dispersant possédant un groupe hydrophile cationique et la fine particule de résine possède un groupe hydrophile cationique.

3. Composition d'encre aqueuse selon la revendication 1 ou 2, dans laquelle la fine particule de pigment est du noir de carbone autodispersant à la surface duquel au moins un groupe hydrophile est fixé, directement ou par l'intermédiaire d'un autre groupe atomique.

4. Composition d'encre aqueuse selon la revendication 3, dans laquelle ledit groupe hydrophile est un groupe cationique.

5. Composition d'encre aqueuse selon l'une quelconque des revendications 1 à 4, dans laquelle le composé représenté par ladite formule générale (I) est contenu dans une quantité de 5 à 15 pour cent en poids, sur la base du poids total de l'encre aqueuse.

6. Composition d'encre aqueuse selon l'une quelconque des revendications 1 à 5, dans laquelle ledit alcool polyhydrique est au moins l'un, choisi dans le groupe consistant en : glycérol, propylèneglycol, 1,5-pentanediol, 1,2,6-hexanetriol et hexylèneglycol et la quantité dudit alcool polyhydrique se situe dans la plage de 0,1 à 10 pour cent en poids.

7. Utilisation de la composition d'encre aqueuse selon l'une quelconque des revendications 1 à 6, pour son application

dans l'enregistrement à jet d'encre.

8. Cartouche d'encre comprenant un conteneur d'encre contenant l'encre aqueuse selon l'une quelconque des revendications 1 à 6.

9. Utilisation d'un conteneur d'encre contenant la composition d'encre aqueuse selon l'une quelconque des revendications 1 à 6 dans une unité d'enregistrement comprenant en outre une tête à jet d'encre destinée à éjecter l'encre.

10. Utilisation d'un conteneur d'encre contenant la composition d'encre aqueuse selon l'une quelconque des revendications 1 à 6 dans un appareil d'enregistrement à jet d'encre comprenant en outre une tête à jet d'encre destinée à éjecter l'encre.

11. Procédé d'enregistrement à jet d'encre comprenant une étape consistant à appliquer la composition d'encre aqueuse selon l'une quelconque des revendications 1 à 6 sur un support d'enregistrement à l'aide d'un processus à jet d'encre.

FIG. 1

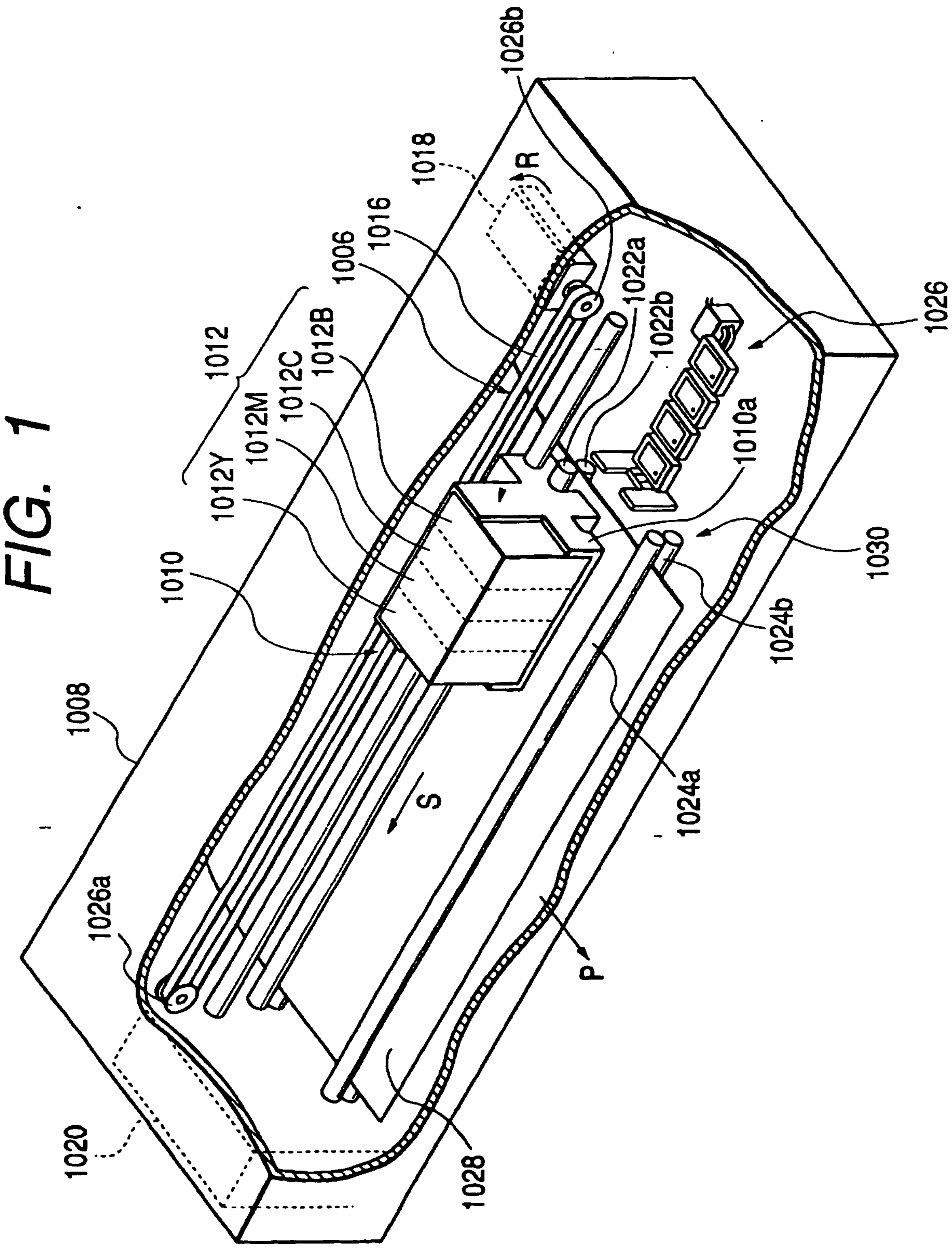
1026b
1018
R
1016
1006
1012
1012B
1012C
1012M
1012Y
1022a
1022b
1026
1010a
1030
1010
1024b
1008
S
1024a
1026a
P
1020
1028

FIG. 2

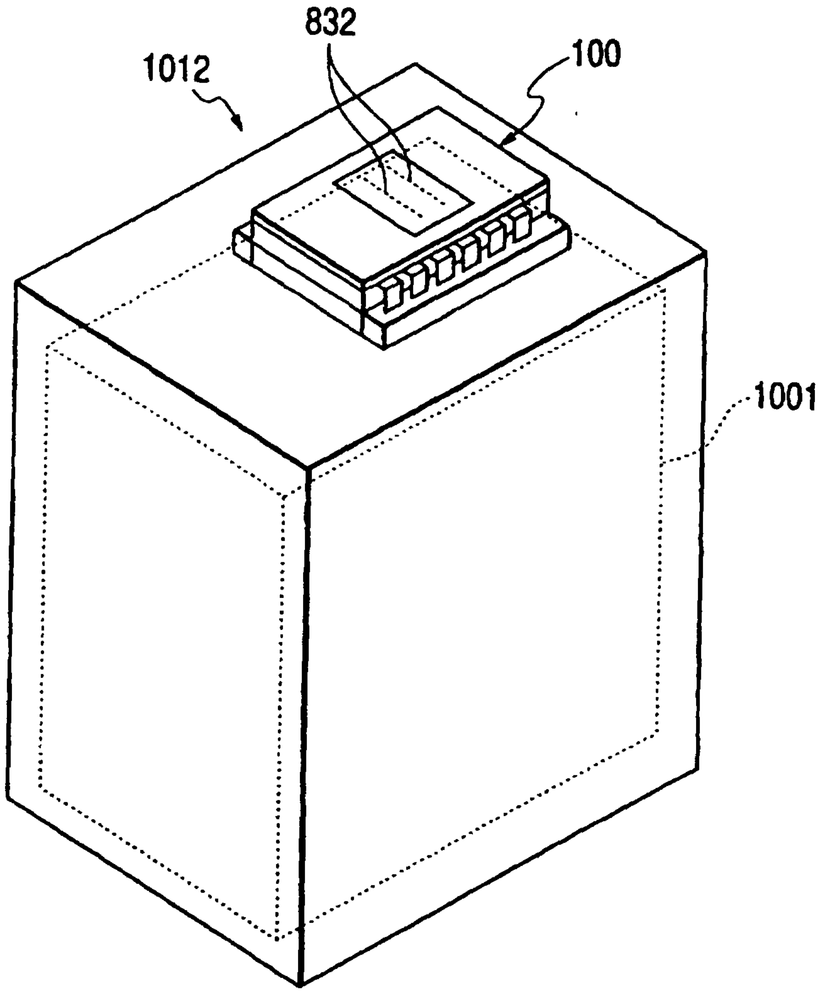

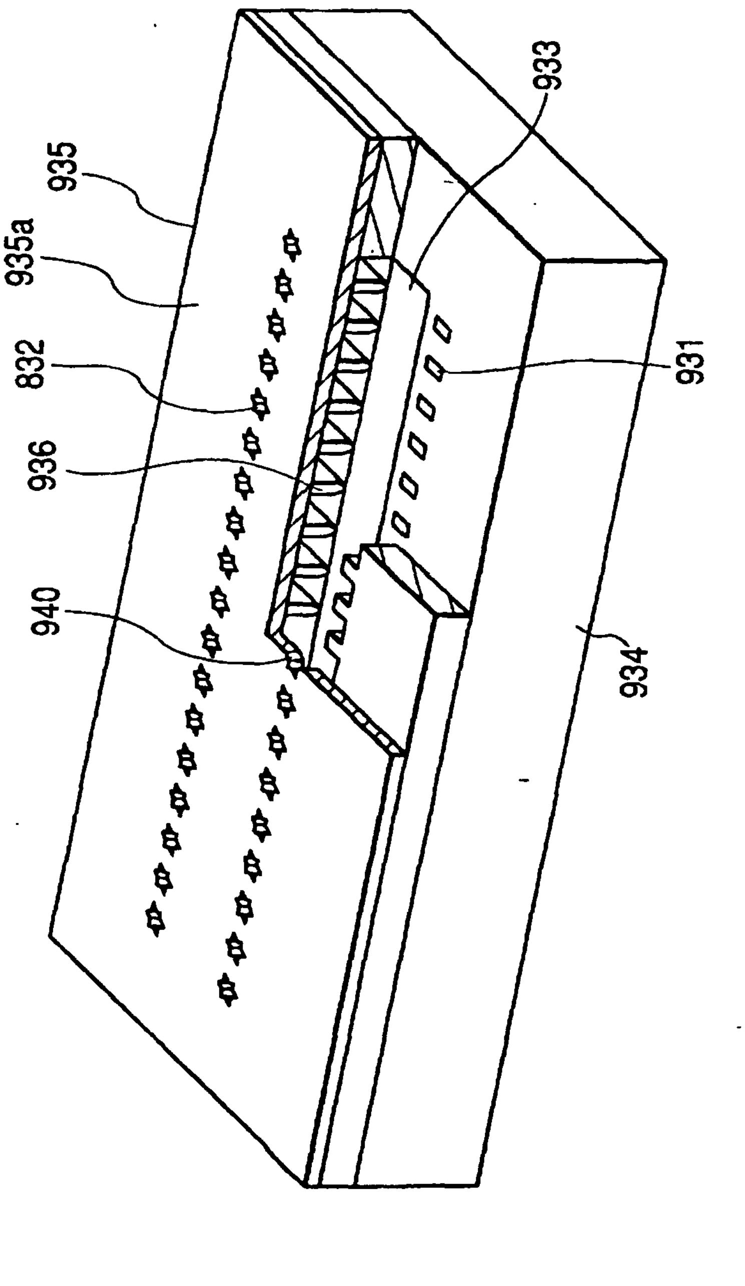


FIG. 3

FIG. 4

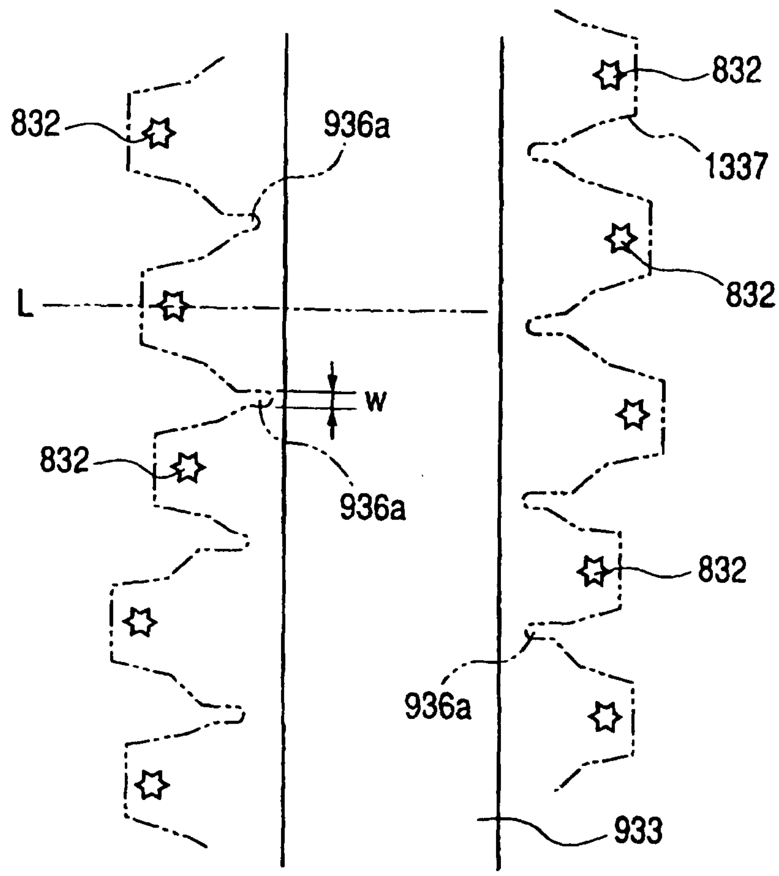
832
832
936a
1337
832
L
W
832
936a
832
936a
933

FIG. 5

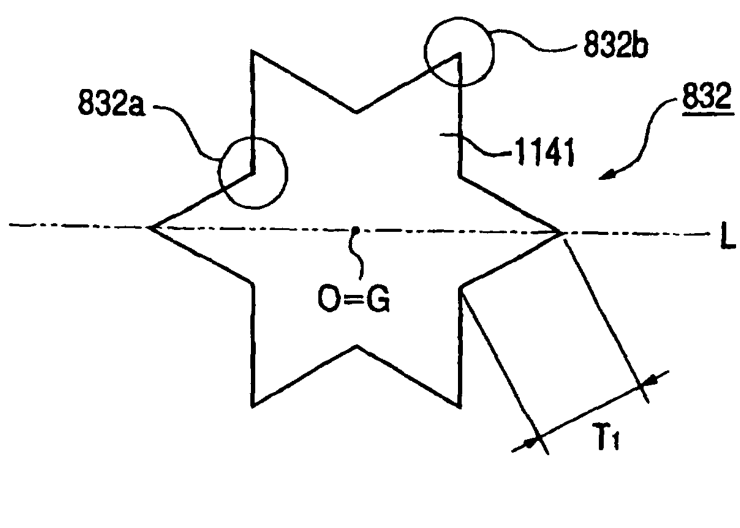
832b
832a
832
1141
L
O=G
T1

FIG. 6

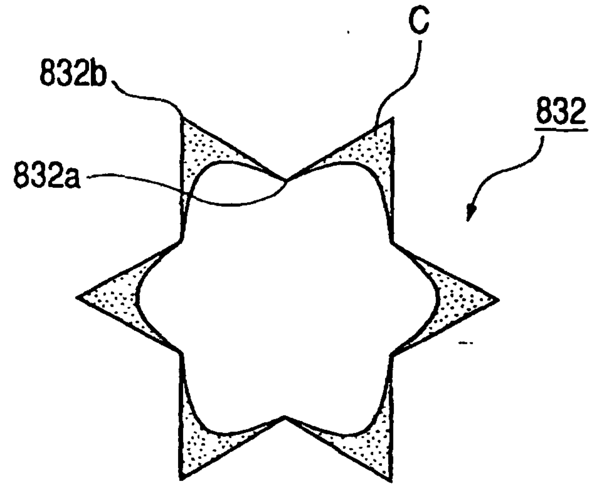


FIG. 7

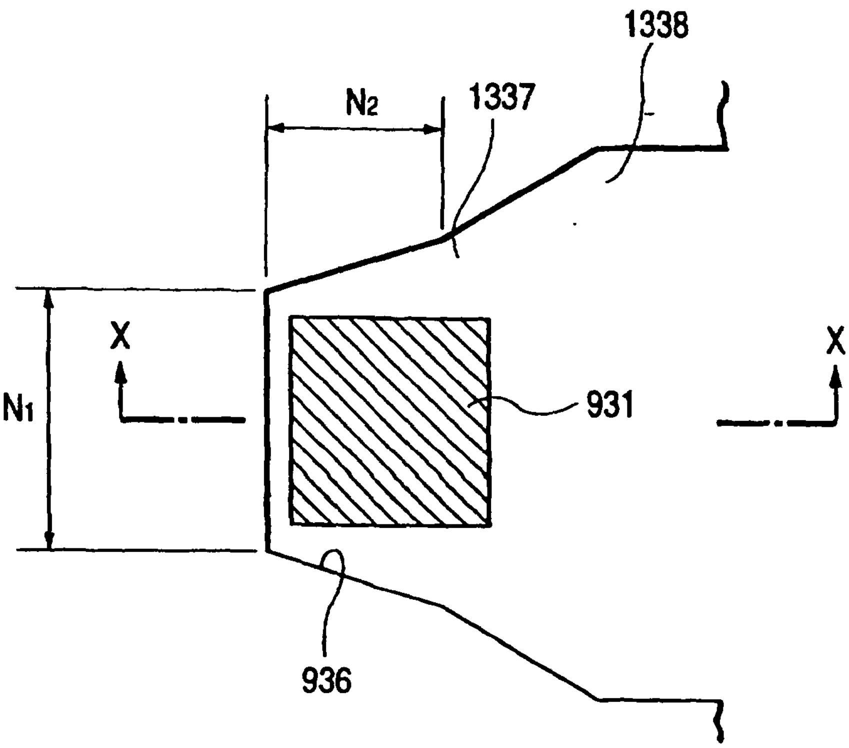

FIG. 8

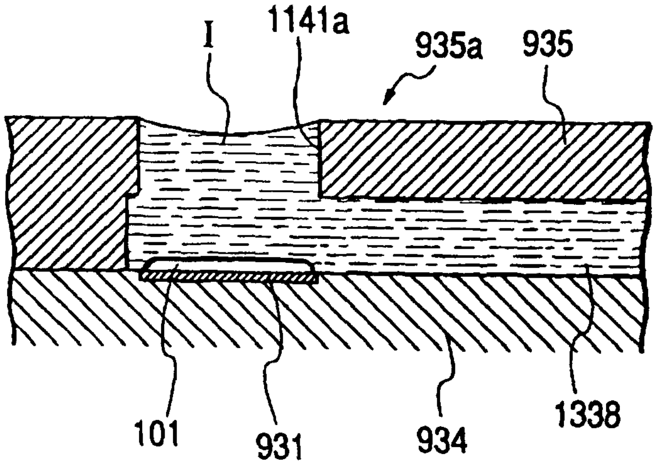
I
1141a
935a
935
101
931
934
1338

FIG. 9

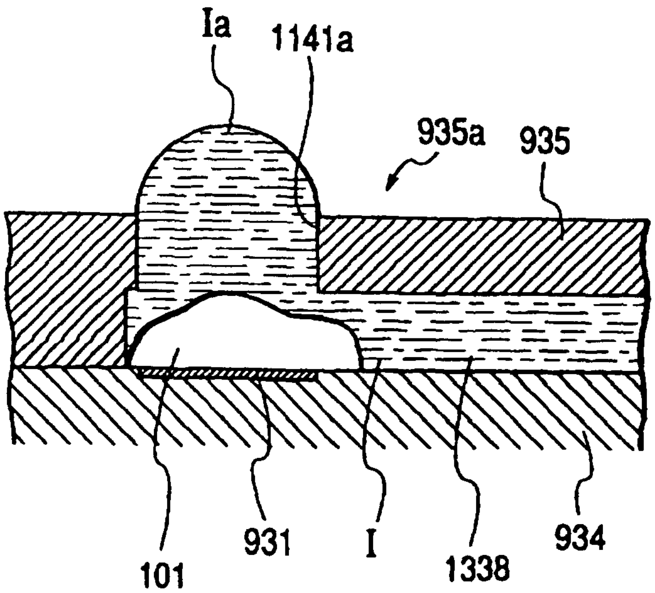
Ia
1141a
935a
935
101
931
I
1338
934

FIG. 10

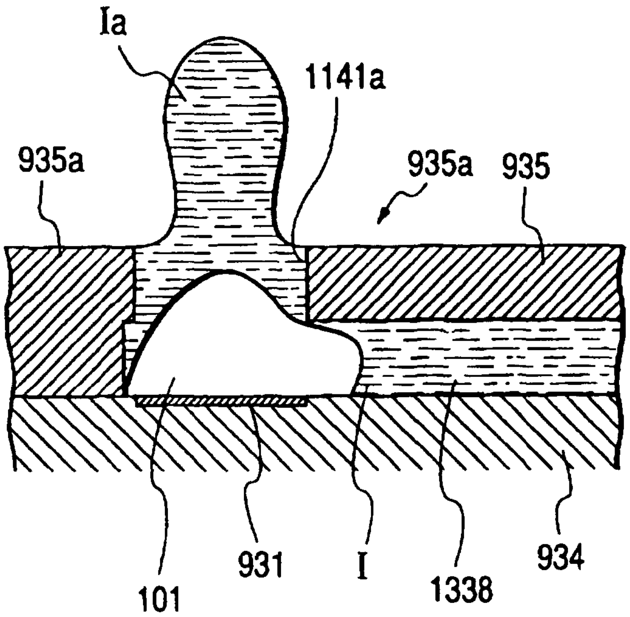
Ia
1141a
935a
935a
935
101
931
I
1338
934

FIG. 11

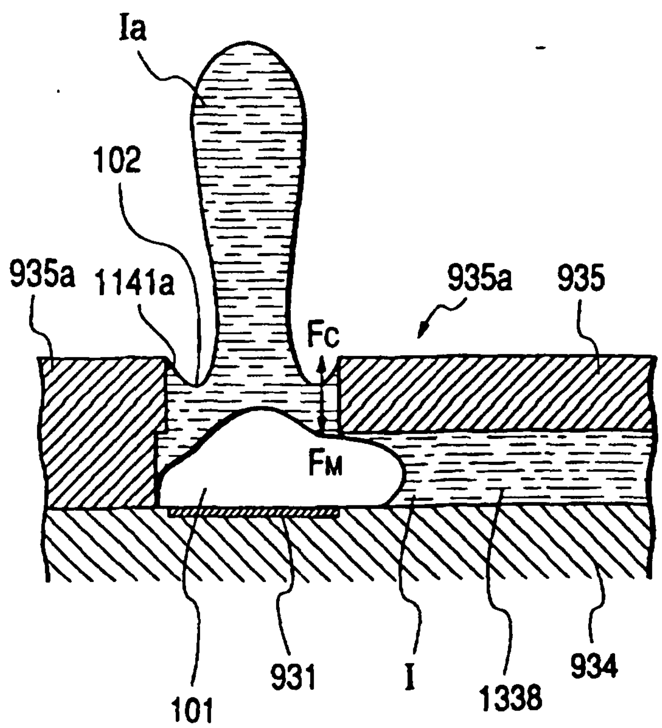
Ia
102
935a
1141a
935a
935
Fc
FM
101
931
I
1338
934

FIG. 13

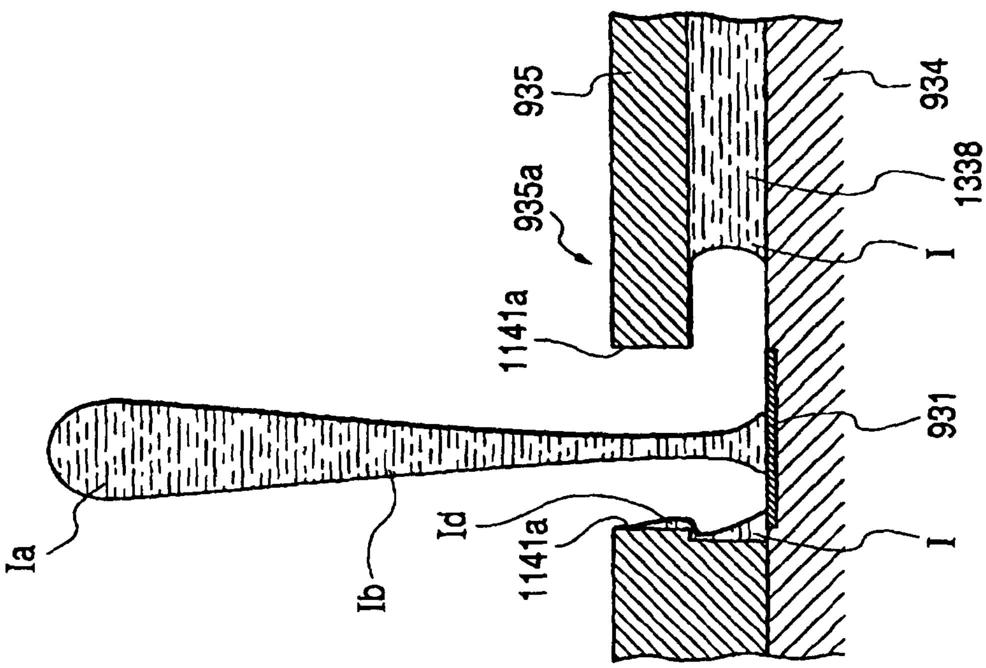
935
934
935a
1338
1141a
I
931
Ia
Ib
Id
1141a
I

FIG. 12

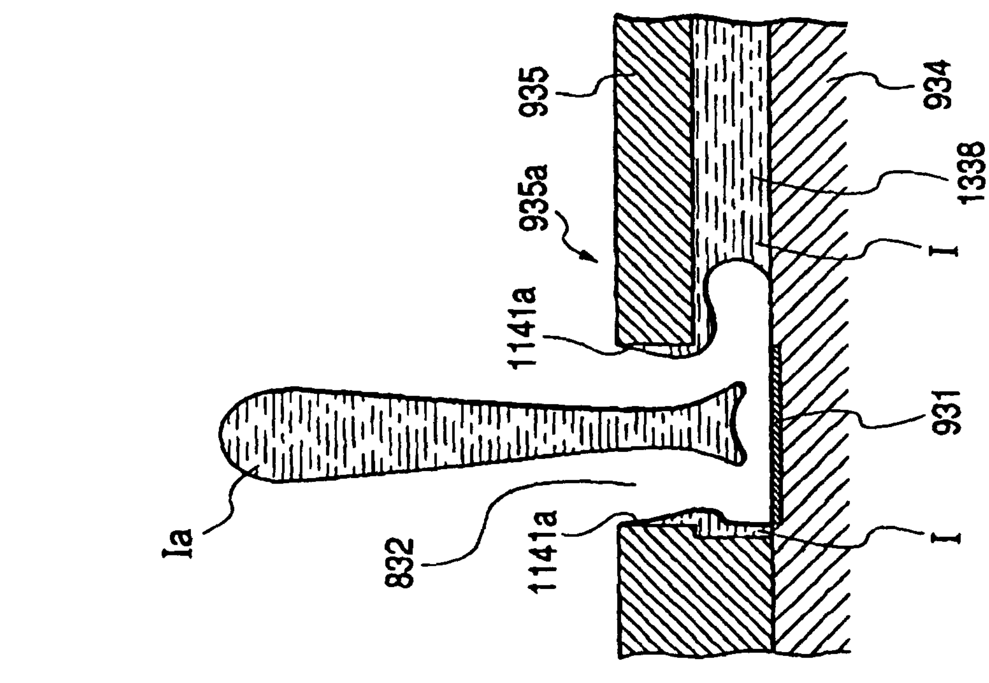
935
934
935a
1338
1141a
I
931
Ia
832
1141a
I

FIG. 14

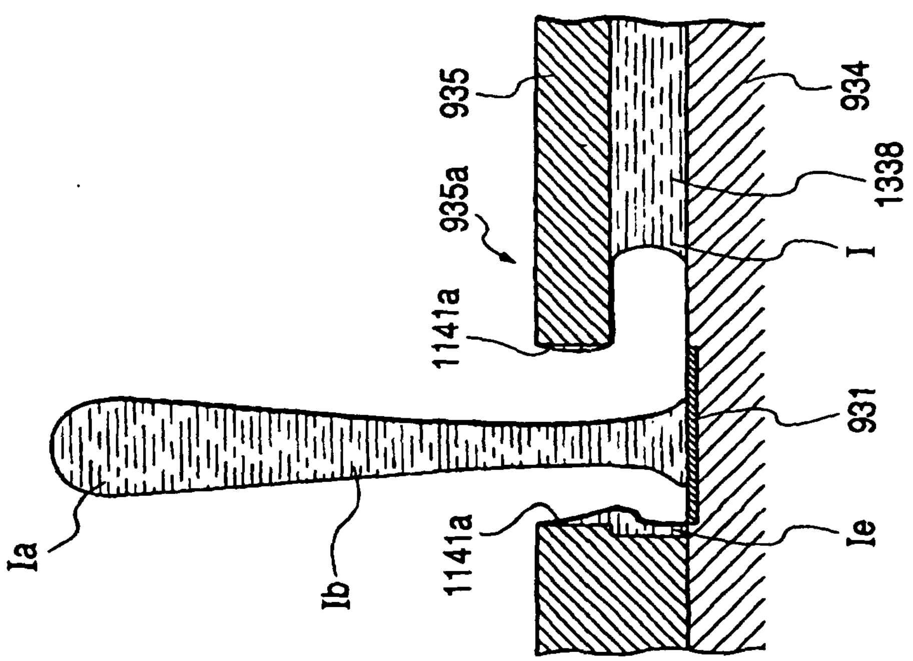
935
935a
1141a
1141a
Ia
Ib
931
Ie
I
1338
934

FIG. 15

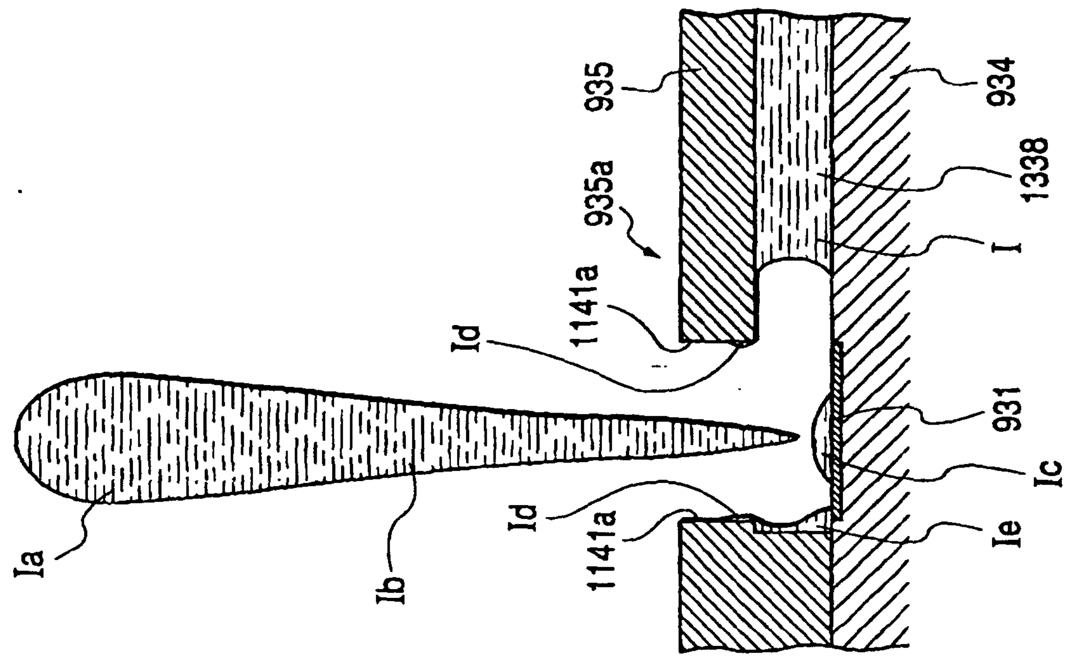
935
935a
1141a
1141a
Id
Id
Ia
Ib
931
Ic
Ie
I
1338
934

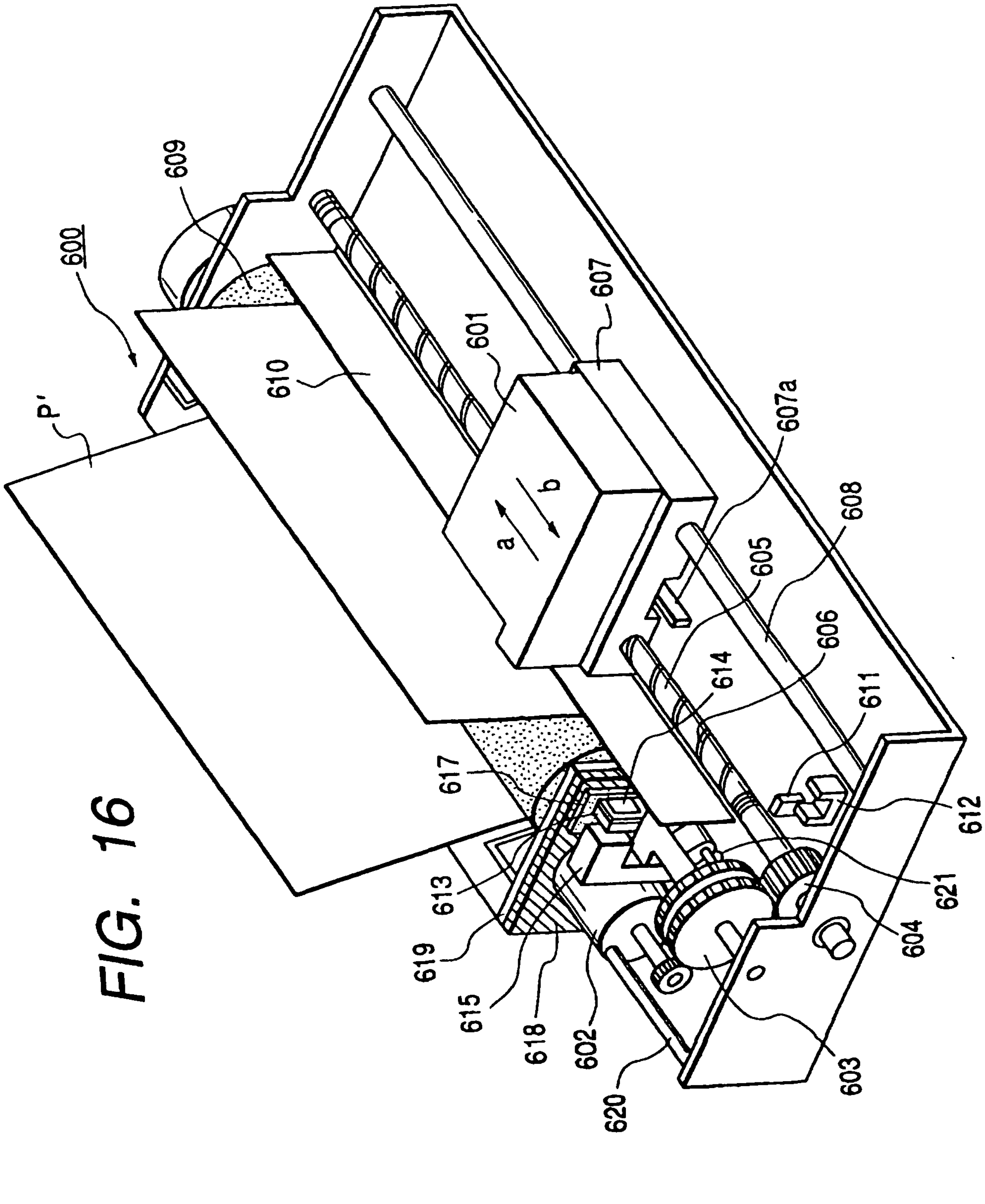
600
P'
609
610
601
607
607a
608
605
a
b
606
614
611
612
621
604
603
617
613
619
615
618
602
620

FIG. 16